# EUROPEAN PATENT APPLICATION

(11) **EP 1 492 266 A1**
(43) Date of publication of application: **29.12.2004**
(21) Application number: 03712938.4
(22) Date of filing: 25.03.2003
(51) Int. Cl.: H04L 9/14, H04L 9/08, H04L 29/06

(54) **COMMUNICATION DEVICE**

(30) Priority: 29.03.2002 JP 2002097241; 29.03.2002 JP 2002097242; 24.04.2002 JP 2002122953; 26.04.2002 JP 2002126847
(71) Applicant: NTI, Inc., Yokkaichi-shi, Mie 512-8044 (JP)
(72) Inventor: NAKAMURA, Takatoshi, Yokkaichi-shi, Mie 512-8044 (JP); YOKOTA, Akihiro, Yokkaichi-shi, Mie 512-8044 (JP)
(74) Representative: Grünecker, Kinkeldey, Stockmair & Schwanhäusser Anwaltssozietät
(86) International application number: PCT/JP2003/003653
(87) International publication number: WO 2003/084126

(57) **Abstract**

An invention of a communication apparatus, a communication system, a communication method, in which communications are performed with a communication partner with data enciphered, and an information processing apparatus, an information processing system, an information processing method and service providing method is characterized in that, upon communications of data with the communication partner, the data is converted with a function of protocol which is common with the communication partner, and the function or protocol in converting means is updated in response to a communication operation with the communication partner.

## Description

### Technical field

The present invention relates to a communication apparatus, a communication system, a communication method, an encryption apparatus, and, an information processing apparatus, an information processing system, an information processing method, and a service providing method, and, in particular, relates to a communication apparatus, a communication system, a communication method, an encryption apparatus, and, an information processing apparatus, an information processing system, an information processing method, and a service providing method with which communicates are performed with a communication partner with data enciphered.

### Background art

When enciphering data in a communication apparatus, common key data is used between a transmitting apparatus and a receiving apparatus. At this time, in the prior art, key data itself is transmitted and received between these apparatuses, or an external factor, for example, general weather information etc., is used as key data. Moreover, even in a case where encryption is changed dynamically, it depends on predetermined external key data.

However, with such a conventional type of communication apparatus, when key data or a place of key data is leaked, the code is decoded easily, and thus, the communication data is leaked.

The present invention has been made in view of the above-mentioned point, and aims at providing a communication apparatus, a communication system, a communication method, an encryption apparatus and an information processing apparatus, an information processing system, an information processing method, and a service providing method, in which secrecy performance is improved

### Disclosure of the Invention

According to the present invention, in case of communications with a communication partner, data is converted with a function or protocol which is common with the communication partner, also, the function or protocol is updated according to a communication operation with a communication partner.

According to the present invention, the function or protocol is made common with the communication partner, and the function or protocol is updated internally for each communication operation according to the number of communication operations, the communication data, or a combination thereof. In other words, an encryption key used for encryption or decoding is self-generated. This encryption key is referred to as a self-generating key. By using the self-generating key, even when the function or protocol is leaked, the function or protocol is self-generated for each communication operation or for each communication data, thus is updated sequentially, and, thereby, the information cannot be easily deciphered only with the leaked function or protocol. Thereby, it becomes possible to improve the secrecy performance on the communication data.

For example, updating of a function table is such as to set the number of times of data communication operations as at least one coefficient of a functional operation, and to update the function table.

According to the present invention, the function for enciphering is updated internally for each communication occasion, and, thus, encryption can be achieved without communicating the function. Thereby, the secrecy performance on communication data is improved.

Moreover, data communicated with the communication partner is set as at least one coefficient of an operation performed in a function table, and the function table is updated.

According to the present invention, data communicated with the communication partner is set as at least one coefficient of an operation performed in a function table, and the function table is updated, and thus, encryption can be achieved without communicating the function table. Thereby, the secrecy performance on the communication data can be improved.

Furthermore, one function or protocol is selected from a plurality of functions or protocols previously set, according to the number of times of data communication operations, and encryption or decryption is performed. Moreover, one function or protocol is selected from a plurality of functions or protocols previously set, according to the data, and encryption or decryption is updated.

At this time, a method for updating the function or protocol is executed with combining updating processing in a plurality of different updating methods for each communication occasion. Moreover, for a unit of data, the updating processing is performed with combining a plurality of updating methods.

Since the function or protocol used for encryption can be made complicated by thus combining the plurality of different updating methods, the secrecy performance on communication data can be improved according to the present invention.

Moreover, the present invention carries out nonlinear transition on the function or the protocol.

According to the present invention, as the nonlinear transition of the function or protocol is performed, the function or protocol changes in a manner of chaos. Accordingly, even when a specific function or protocol is leaked, the function or protocol which is used subsequently cannot be obtained easily therefrom. Accordingly, decipherment of the code becomes difficult. Therefore, the secrecy performance on the data can be improved.

Furthermore, according to the present invention, a communication apparatus, comprises: a common item obtaining part obtaining a common item which is common with a reception end; key generating means for generating a key based on the common item generated by said common item obtaining part; encryption key generating means for generating a function or protocol based on the key generated by said key generating means; and enciphering means for performing encryption based on the function or protocol generated by said encryption key generating means.

According to the present invention, a common item which is common between a transmission end and a reception end is obtained; a key is obtained for selecting an encryption key; a function or protocol is generated based on the key thus generated; and encryption is performed based on the function or protocol thus generated. Thereby, even when only the key or only the protocol is obtained, decipherment of the code is difficult, and thus, the secrecy performance can be improved.

Further, according to the present invention, predetermined information of the function or protocol is obtained as a key. Thus, the key cannot be obtained without obtaining the function or protocol. Accordingly, decipherment of the code is difficult, and thus, the secrecy performance can be improved.

Furthermore, according to the present invention, the function or protocol is generated via nonlinear transition.

According to the present invention, as the function or protocol is thus made to undergo nonlinear transmission, the function or protocol can be changed in a chaos manner, and, thus, decipherment of the code becomes difficult even when a specific function or protocol is obtained.

According to the present invention, original data is read from a file and is enciphered; in an intermediate file, the enciphered data thus enciphered is stored; the data stored in said intermediate file is decoded; and, as a predetermined file, the data thus decoded is stored.

Further, according to the present invention, communication means is provided for transmitting to a communication destination a file stored in file storing means via a network.

According to the present invention, original data is read from a file and is enciphered; in an intermediate file, the enciphered data enciphered is stored; the data stored in said intermediate file is then decoded; and, as a predetermined file, the data decoded is stored. Thereby, the enciphered data can be stored as the intermediate file, and, thus, the secrecy performance of the stored data can be improved. Further, as the intermediate file can be transmitted via an ordinary communication apparatus, encryption can be easily introduced.

Furthermore, according to the present invention. an encryption part includes table generating means which dynamically changes a table used for enciphering an original data.

According to the present invention, as the encryption part includes the table generating means which dynamically changes the table used for enciphering an original data, the table used for encryption is changed dynamically. Thereby, even when the table is temporarily obtained, the deciphering of the coded data is difficult, and, thus, the secrecy performance of the data can be improved.

Further, according to the present invention, the enciphering part includes: key generating means for generating a key based on a common item; table selecting means for selecting a predetermined table from among a plurality of tables generated by the table generating means based on the key generated by the key generating means; and enciphering means for performing encryption based on the table selected by the table selecting means.

According to the present invention, the enciphering part generates a key based on the common item, selects a predetermined table from among the plurality of tables based on the generated key, and performs encryption based on the table selected. Thus, in order to decode the code, not only the table but also the common item and key should be obtained. Accordingly, it is difficult to easily decipher the code, and, thus, the secrecy performance on the data can be improved.

Further, according to the present invention, in a communication system performing enciphering communications via a repeating communication apparatus between a source communication apparatus and a destination communication apparatus, the communication apparatus comprises enciphering means for performing predetermined encryption on communication data, and decoding communication data having undergone the predetermined encryption; and encryption performed by said enciphering means is made different for each of the communication apparatuses.

Furthermore, in the communication system, serial communication is performed from the source communication apparatus to the destination communication apparatus via a plurality of communication apparatuses in a relay manner.

Furthermore, according to the present invention, a communication system in which encryption communications are performed between a plurality of source communication apparatuses and a plurality of destination communication apparatuses includes a first relay communication apparatus which performs encryption communications with the plurality of source communication apparatuses; and a second relay communication apparatus which performs a relaying function on encryption communications between the first relay communication apparatus and the plurality of destination communication apparatuses, and thus encryption communications are performed between the first relay communication apparatus and second relay communication apparatus.

In the communication system, the first relay communication apparatus performs encryption which is different among the plurality of source communication apparatuses.

Further, in the communication system, the second relay communication apparatus performs encryption which is different among the plurality of destination communication apparatuses.

According to the present invention, as the encryption of the enciphering means is made different for each communication apparatus, different encryption is performed for each communication path. Thereby, the coded data cannot be deciphered easily, and, thus, the secrecy performance on the communications can be improved.

### Brief description of the Drawings

FIG. 1 is a system configuration view of a first embodiment of the present invention;
FIG. 2 is a block configuration view of a server 11 and a client 12;
FIG. 3 is a block configuration view of a communication device 27;
FIG. 4 is a block configuration view of a memory 32;
FIG. 5 is a data configuration view of a function table stored in the memory 32;
FIG. 6 is a processing flow chart at a time of communication start of the communication device 27;
FIG. 7 is a processing flow chart of transmitting processing of the communication device 27;
FIG. 8 is a processing flow chart of reception processing of the communication device 27;
FIG. 9 is a processing flow chart of communication start processing of a first variant of the communication device 27;
FIG. 10 is a processing flow chart of transmitting processing of the first variant of the communication device 27;
FIG. 11 is a processing flow chart of reception processing of the first variant of the communication device 27;
FIG. 12 is a block configuration view of a second variant of the communication device 27;
FIG. 13 is a processing flow chart at a time of communication starting of the second variant of the communication device 27;
FIG. 14 is a processing flow chart of transmitting processing of the second variant of the communication device 27;
FIG. 15 is a processing flow chart of reception processing of the second variant of the communication device 27;
FIG. 16 is a processing flow chart of transmitting processing of a third variant of the communication device 27;
FIG. 17 is a processing flow chart of reception processing of the third variant of a control part 33;
FIG. 18 shows an example of application of the present invention;
FIG. 19 is a system configuration view of a second embodiment of the present invention;
FIG. 20 is a block configuration view of a table selection/generation part 213;
FIG. 21 is an operation diagram of a variant of a key generation method;
FIG. 22 is a system configuration view of a third embodiment of the present invention;
FIG. 23 is a block configuration view of an encryption device 319;
FIG. 24 is a block configuration view of a table selection/generation part 323;
FIG. 25 is an operation diagram of a table selection/generation part 323;
FIG. 26 is a system configuration view of an example of application of an information processing system 301;
FIG. 27 is a system configuration view of a fourth embodiment of the present invention;
FIG. 28 is a block configuration view of an information processing apparatus 511;
FIG. 29 is a block configuration view of an encryption apparatus 539;
FIG. 30 is a data configuration view of a memory 544;
FIG. 31 is a block configuration view of an information processing apparatus 513;
FIG. 32 is a system configuration view of a fifth embodiment of the present invention;
FIG. 33 is a block configuration view of an information processing apparatus 211;
FIG. 34 is a data configuration view of a memory 144 of a variant of the fifth embodiment of the present invention;
FIG. 35 is a system configuration view of a sixth embodiment of the present invention;
FIG. 36 is a system configuration view of a seventh embodiment of the present invention;
FIG. 37 is a block configuration view of a first variant of an encryption/decryption device;
FIG. 38 is an operation diagram of a second variant of the encryption/decryption device;
FIG. 39 is a system configuration view of an eighth embodiment of the present invention;
FIG. 40 is block configuration view of a server 1111;
FIG. 41 is a block configuration view of an output terminal apparatus 1112;
FIG. 42 is a block configuration view of a portable encryption device 1113;
FIG. 43 is an exploded perspective diagram of the portable encryption device 1113;
FIG. 44 is a processing flow chart of the server 1111;
FIG. 45 is a processing flow chart of the output terminal apparatus 1112;
FIG. 46 is a processing flow chart of the portable encryption device 1113;
FIG. 47 is a block configuration view of a variant of the server 1111; and
FIG. 48 is a block configuration view of an encryption device 1182.

### The best mode for embodying the present invention

### [First embodiment]

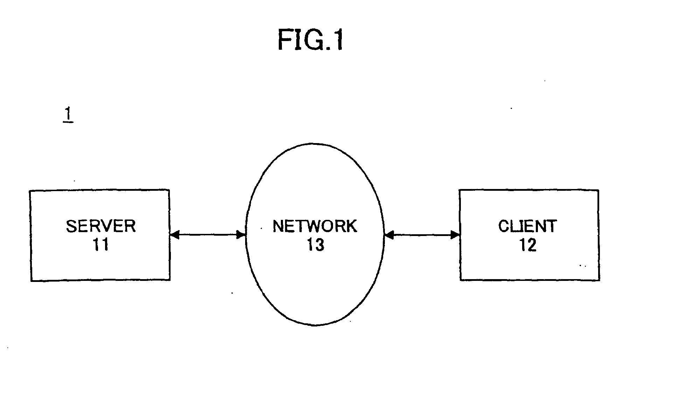

FIG. 1 shows a system configuration view of a first embodiment of the present invention.

A communication system 1 in the embodiment is configured such as to be able to perform communications between a server 11 and a client 12 through a network 13.

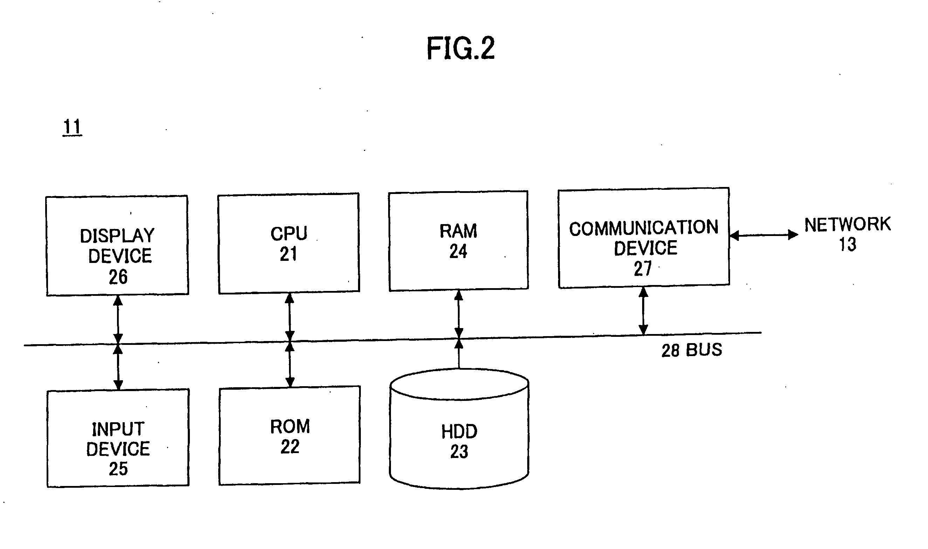

FIG. 2 shows a block configuration view of the server 11 and client 12.

The server 11 and the client 12 are configured to each include a CPU (central processing unit) 21, a ROM (read only memory) 22, a HDD (hard disk drive) 23, a RAM (random access memory) 24, an input device 25, a display 26, a communication device 27, and a bus 28. Exchange of data among the CPU 21, ROM 22, HDD 23, RAM 24, input device 25, display 26, and communication device 27 is enabled by the bus 28 there. The CPU 21 performs processing based on a program stored in the ROM 22 or HDD 23. The RAM 24 is used as a work memory area at a time of data processing by the CPU 21.

The input device 25 includes a keyboard, a mouse, etc., and is used for inputting instructions or data. The display 26 includes an LCD (liquid crystal device), a CRT (cathode ray tube), or so., and is used for display of input data or processed data. The communication device 27 performs encoding/decoding of data, and performs communication control with the client 12 through the network 13.

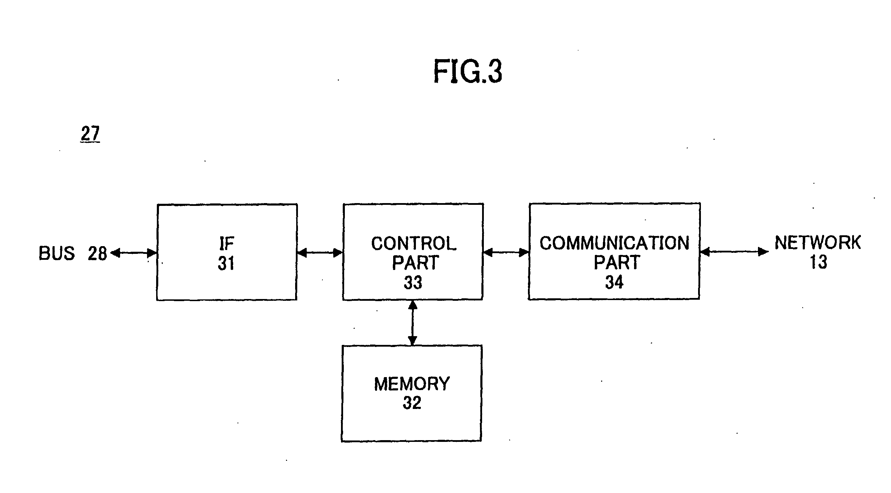

FIG. 3 shows a block configuration view of the communication device 27.

The communication device 27 includes an interface part 31, a control part 32, a memory 33, and a communication part34.

The interface part 31 acts as an interface between the bus 28 and the control part 33. The control part 32 carries out data encoding/decoding based on a function table while making a memory 32 store the function table which acts as operation means. The communication part 34 is used for communication control between the server 11 and client 12 through the network 12.

The control part 33 acts as updating means for the function table, and updates the function table stored in the memory 32 based on the number of times of communication operations, or on the communication data.

The memory 32 will now be described in detail.

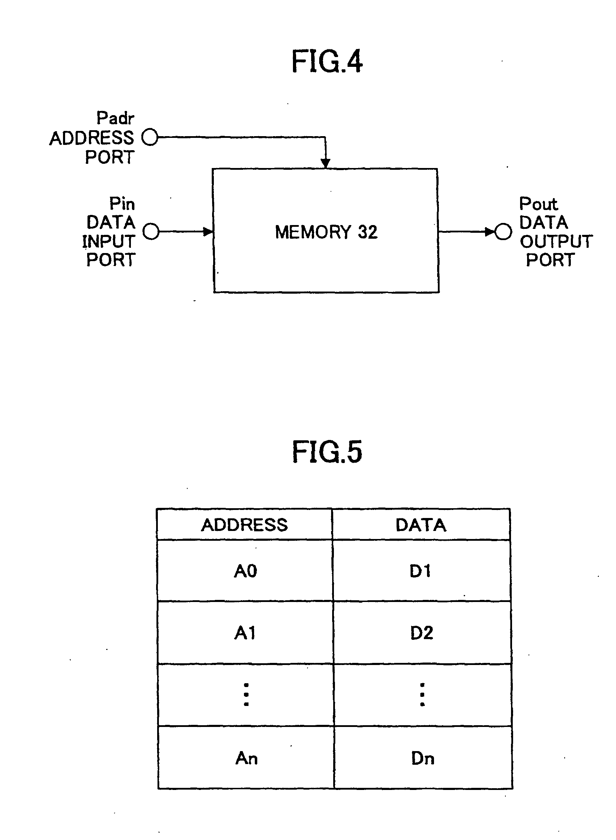

FIG. 4 shows a block configuration view of the memory 32. The memory 32 is made of a dual port RAM, for example, and includes a data input port Pin, a data output port Pout, and an address port Padr. The memory 32 stores data input via the input port Pin at an address specified via the address port Padr. At a time of data output, data is read from an address specified via the address port Padr, and then is read out via the data output port Pout.

The function table is a table configured such that y = f(x), assuming that output data output from the data output port Pout of the memory 32 is referred to as data y, when an address supplied via the address port Padr of the memory 32 is referred to as input data x.

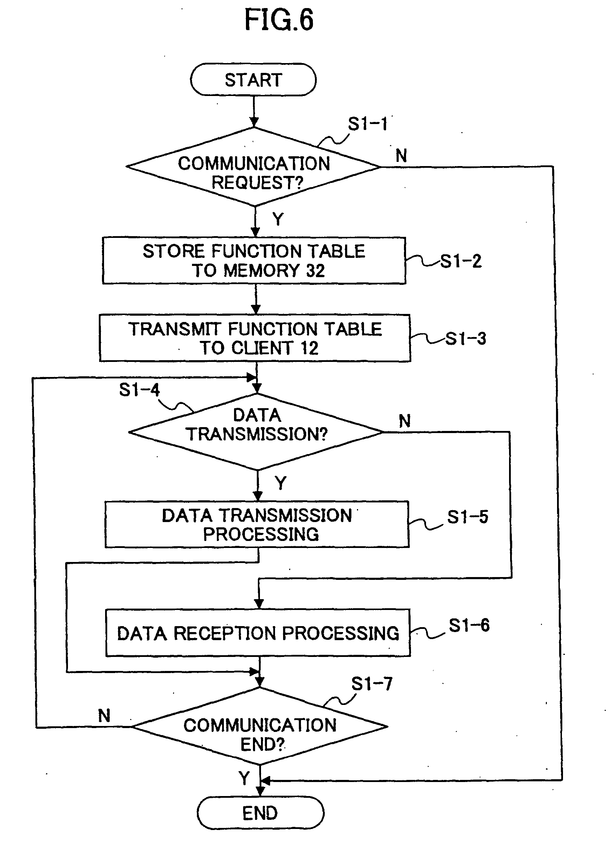

FIG. 5 shows a data configuration view of the function table stored by the memory 32.

Data D1 through Dn is stored corresponding to the addresses A1 through An. The data D1 stored at the address A1 at this time is set such that D1 = f(A1). Moreover, the data D2 stored at the address A2 is such that D2 = f(A2). Similarly, the data Dn stored at the address An is such that Dn =f(An).

Thus, the data Di as a result of operation with a desired function f being made is obtained by specifying the address Ai corresponding to the input data from among the addresses A1 through An. Thereby, the operation result can be obtained at high speed.

Here, operation of communication device 27 will now be described.

FIG. 6 shows a processing flow chart at a time of communication start of the communication device 27.

The function table as shown in FIG. 5 is provided to the control part 33 from the CPU 21, upon communications with the client 12 being requested, at a step S1-1, and is stored by the memory 32 at a step S1-2. At this time, the number n of times of communication operations is reset into "0". Moreover, the control part 33 transmits the function table to the client 12 to which data should be transmitted, in a step S1-3.

The control part 33 performs transmitting processing at a step S1-5, if transmission data is supplied through the interface 31 from the bus 28 at a step S1-4. Moreover, if received data from the client 12 is received at a step S1-4, reception processing is performed at a step S1-6. Steps S1-4 through S1-6 are repeated until a communication end instruction is issued from the CPU 21 at a step S1-7.

Next, transmitting processing in the control part 33 of the communication device 27 will be described.

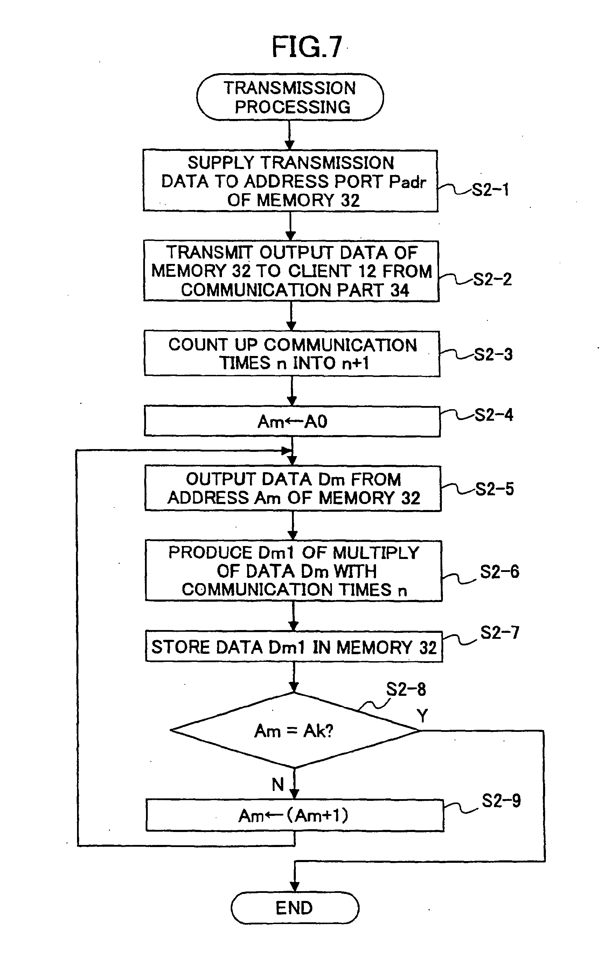

FIG. 7 shows a processing flow chart of transmitting processing of the communication device 27.

The control part 33 supplies to the address port Padr of the memory 32 the transmitting data supplied at the step S2-1 as an address, and makes the data according to the address output from the memory 32. The output data of the memory 32 corresponds to a result of predetermined operation f performed on the transmitting data. The control part 33 supplies the output data of the memory 32 to the communication part 34 at a step S2-2.

The control part 33 resets an address Am to an initial address A0 at a step S2-4 while counting up the number n of times of communication operations at a step S2-3 and thus updating it to (n+1), when the data is transmitted. Next, the control part 33 reads data from the address Am of the memory 32 at a step S2-5, carries out a multiplication of the number n of times of communication operations with the thus-read data Dm at a step S2-6, and thus generates data of: {n x Dm} = Dm1.

The control part 33 stores at the address Am of the memory 32 the data Dm1 having undergone the multiplication based on the number n of times of communication operations at a step S2-7. The control part 33 determines whether the address has reached the last address Ak of the function table in step S2-8. When the address has not reached the last address Ak in the step S2-8, the address Am is set to the address Am+1 at a step S2-9, and the data is read.

The contents of the function table of the memory 32 are updated by {n x f(x)} by repeating the processing of above-mentioned steps S2-5 through S2-9 to the last address Ak. It is noted that f(x) shows the function set as the first function table. Thereby, next transmitting data is enciphered on the updated function table {n x f(x)}.

Processing is ended when the address Am become the last address Ak at a step S2-8.

Next, reception processing of the control part 33 will be described.

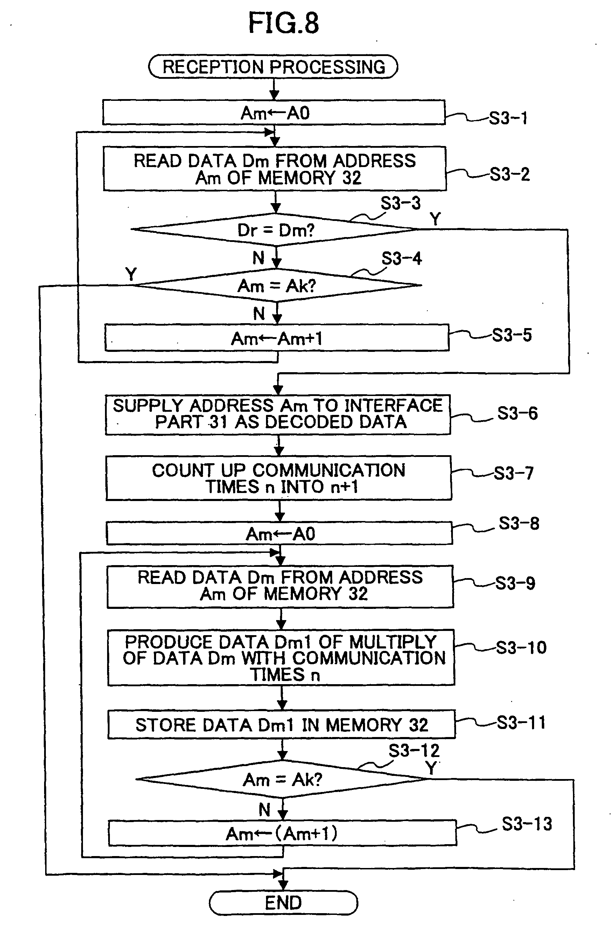

FIG. 8 shows a processing flow chart of the reception processing of the communication device 27.

The control part 33 resets the address Am into the initial address A0 in the memory 32 at a step S3-1, when the receiving data Dr is received from the client 12 through the network 13. Next, Data Dm is read from the address Am of the memory 32 at a step S3-2.

Next, it is determined whether the data Dr received and the data Dm are in agreement at a step S3-3. When the receiving data Dr and the data Dm are not in agreement at the step S3-3, it is determined whether the address Am is the last address at a step S3-4. When the address Am is the last address Ak in the step S3-4, the address Am is counted up at a step S3-5, into the 5 following address Am+1.

However, when the dress Am is the last address Ak in the step S3-5, the data Dm corresponding to the receiving data Dr does not exist, and thus, it is determined that a communication error occurs and the processing is ended.

When the data Dm read from the memory 32 at the step S3-3 is in agreement with the receiving data Dr, the interface part 31 is supplied with the address Am as the decoded data at a step S3-6. The received data Dr is thus decoded.

Next, the control part 33 counts up the number of times n of communication operations to (n+1) at a step S3-7. Next, the address Am is set to the initial address A0 at a step S3-8. The control part 33 reads the data Dm from the address Am of the memory 32 at a step S3-9. Next, the control part 33 carries out multiplication of the number n of times of communication operations with the data Dm read from the memory 32 at a step S3-10, and thus generates data: {(n+1) x Dm} =Dm1.

The control part 33 stores the data Dm1 which is obtained from the multiplication carried out based on the number n of times of communication operations at the address Am of the memory 32 at a step S3-11. The control part 33 determines whether the address has reached the last address Ak of the function table in step S3-12. When the address has not reached the last address Ak in the step 3-12, the address Am is set to the address Am+1 at a step S3-13, and, the processing is returned to the step S3-9, data being then read.

The contents of the function table of the memory 32 are updated by {n x f(x)} by repeating the processing of above-mentioned steps S3-9 through S3-13 to the last address Ak, where f(x) shows the function set as the first function table. Thereby, the next received data is decoded based on the updated function table {n x f(x)}.

Moreover, if the address Am becomes the last address Ak at the step S3-12, since it can be determined that the function table stored by the memory 32 has been updated, the processing is ended.

The client 12 performs communications in response to communication request made by the server 11, has an approximately same configuration as that of the server 11, but. performs processing different from that at a time of communication starting. Accordingly, the processing at a time of the communication start of the client 12 will now be described.

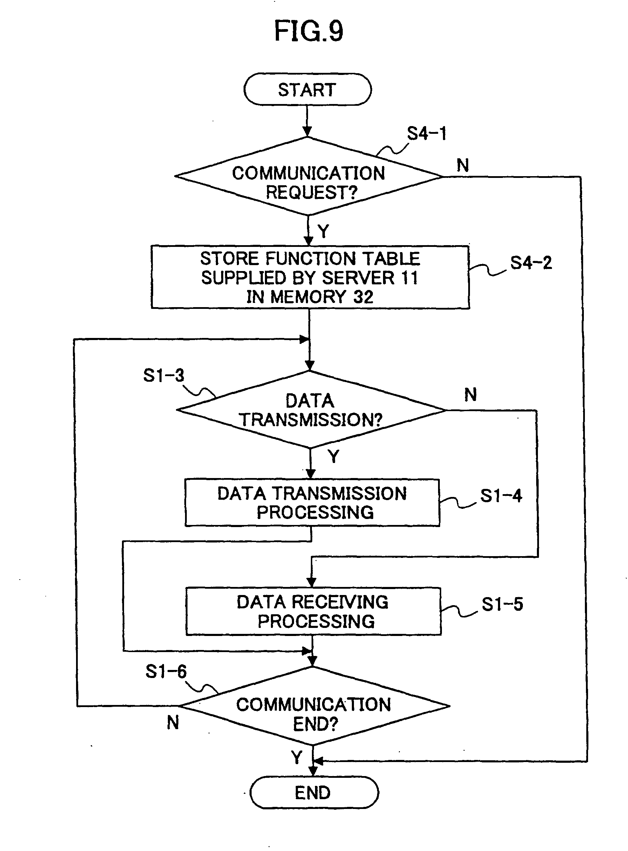

FIG. 9 shows a processing flow chart at a time of communication start of a first variant of the communication device 27. Same reference numerals are given to the same processing portions as those of FIG. 6, and duplicated descriptions are omitted.

When the client 12 has a communication request from the server 11 at a step S4-1, the memory 32 of communication device 27 stores the function table supplied by the server 11 at a step S4-2. Thereby, the common function table is owned by the server 11 and the client 12.

By performing the transmitting processing shown in FIG. 7, and the reception processing shown in FIG. 8, the function table is similarly updated internally in each of the server 11 and client 12, and encoding/decoding or encryption/decryption is performed there. Therefore, the function table used for encoding/decoding or encryption/decryption is communicated only at a communication start time, and then, the function table is updated for every communication occasion henceforth. Accordingly, high secrecy performance on the communications is attained.

Although the function table is updated with the operation of carrying out multiplication of the function f(x) with the number n of times of communication operations as a coefficient, it is also possible to multiply the data communicated to the function f(x) as a coefficient.

Transmitting processing in the case of updating the function table based on the communication data will now be described.

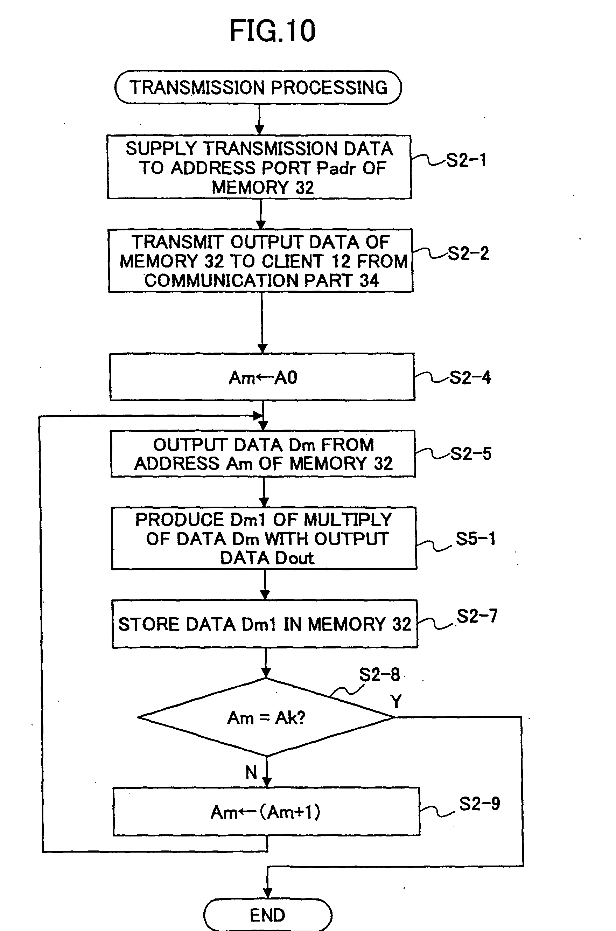

FIG. 10 shows a processing flow chart of transmitting processing of a first variant of the communication device 27. The same reference numerals are given to the same processing portions as those of FIG. 7, and duplicated descriptions are omitted.

In this variant, the step S2-3 of transmitting processing shown in FIG. 7 is deleted, and, instead of the processing of the step S2-6, a step S5-1 is processed. The step S 5-1 carries out a multiplication of the data Dout read from the memory 32 with the data Dm output at the step S2-5, at the step S2-2, and thus the data Dm1 is created.

Next, reception processing in the case of updating the function table based on the communication data will be described.

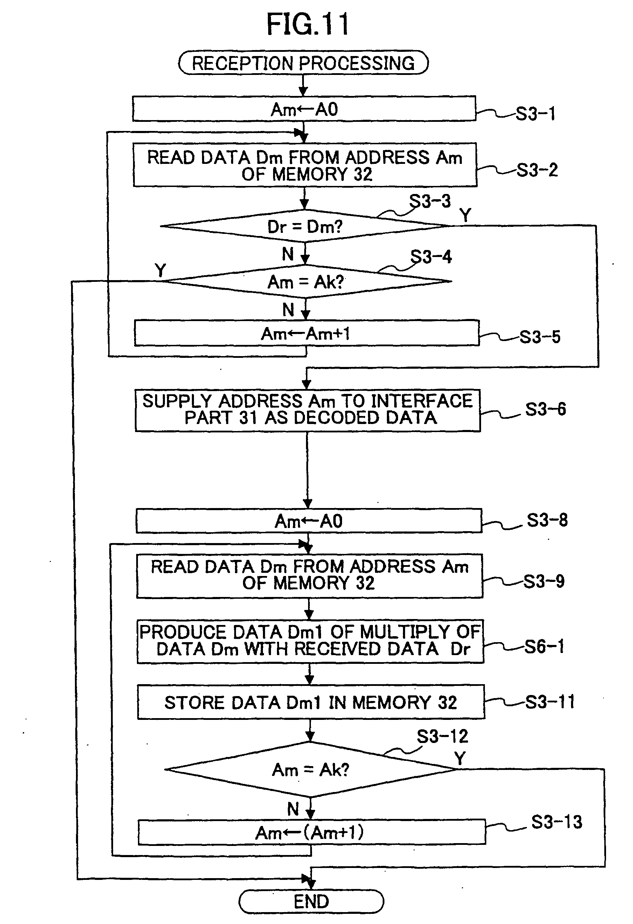

FIG. 11 shows a processing flow chart of reception processing in a first variant of the communication device 27. The same reference numerals are given to the same processing portions as those of FIG. 8, and duplicated descriptions are omitted. In this variant, the step S3-7 of the reception processing shown in FIG. 8 is deleted, and, instead of the step S3-10, a step S6-1 is processed. The step S 6-1 carries out a multiplication of the received data Dr with the data Dm read at the step S3-9, and thus the data Dm1 is created.

The common function table is thus sharable by the server 11 and the client 12. Moreover, the function table is updated with the data transmitted and received for every occasion of transmission and reception of data, at this case. Therefore, the secrecy performance can be improved.

In addition, although the function table is updated in the present embodiment and the variant thereof with a multiplication to the function table with the number of times of communication operations, or communication data as a coefficient, it is also possible to add the number of times of communication operations, or the communication data. Moreover, it is also possible to use the number of times of communication operations, or the communication data, as a coefficient of a part of the function.

Furthermore, although the function table is updated in the present embodiment by applying a calculation to data of the function table, it is also possible that a plurality of function tables are prepared for each of the server 11 and client 12, and a common function table is selected from the plurality of function tables according to the number of times of communication operations or the communication data, and thus, encryption and decryption are performed.

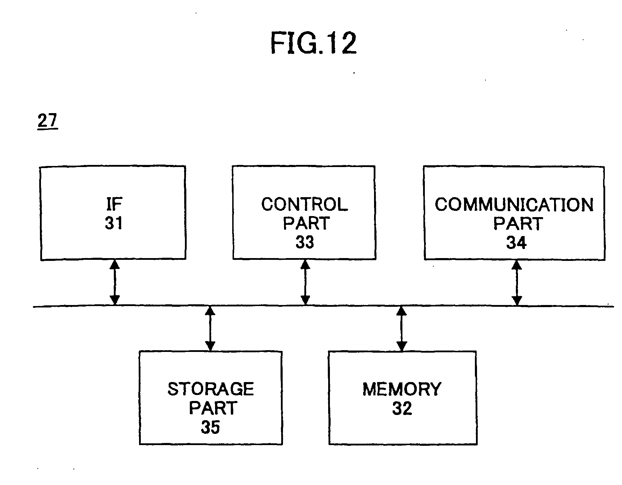

FIG. 12 shows a block configuration view of a second variant of the communication device 27. The same reference numeral is given to the same configuration portion as in FIG. 3, and the duplicated description is omitted.

In addition to the interface part 31, memory 32, control part 33, and communication part 34, the communication device 27 is configured to further include a storage part 35 which stores a plurality of function tables. The plurality of, for example, k function tables, are beforehand stored in the storage part 35. The identification numbers of 1 through k are given to these k function tables. The contents and the identification numbers of these k function tables stored in the storage part 35 are in agreement between the server 11 and the client 12.

Processing at a time of communication starting in the control part 33 will now be described.

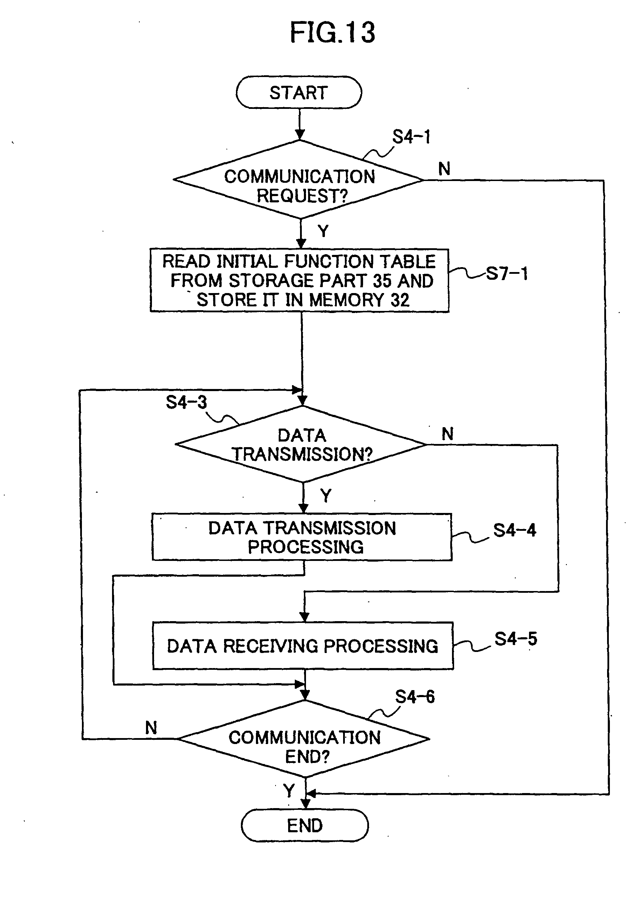

FIG. 13 shows a processing flow chart at the time of the communication start of the second variant of the communication device 27. The same step number is given to the same operation as in FIG. 6, and the duplicated description is omitted.

The processing at a time of communication starting of this variant is such that, instead of the step S1-2 and S1-3, a step S7-1 is executed. The step S 7-1 reads the initial function table from the storage part 35, and the memory 32 is made to store it.

Next, transmitting processing in the control part 33 will be described.

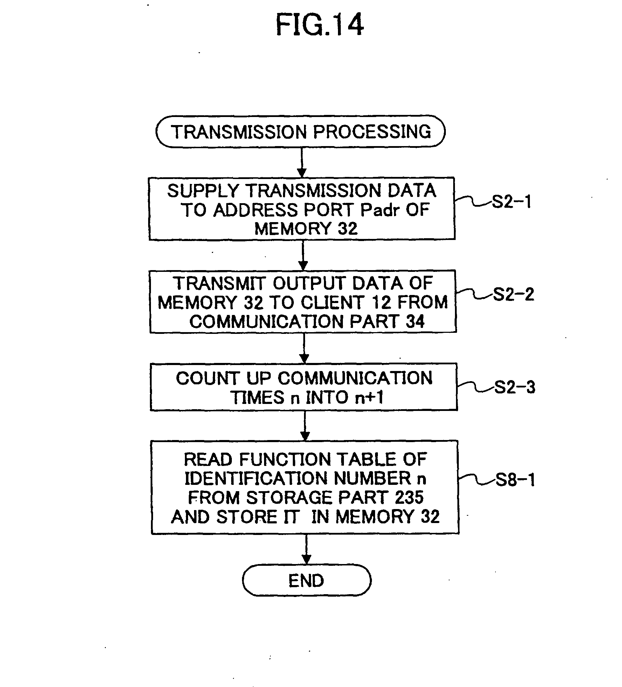

FIG. 14 shows a processing flow chart of transmitting processing of a second variant of the communication device 27. The same step number is given to the same operation as in FIG. 7, and the duplicated description is omitted.

Transmitting processing of this variant is such that, instead of the steps S2-4 through S2-9, a step S8-1 is executed. The step S 8-1 reads from the storage part 35 the function table of the identification number n which function table corresponds to the number of times n of communication operations updated at the step S2-3, and stores it in the memory 32. When the number of times n of communication operations becomes the number k of the function tables, the function table of the identification number "1" is then again read from the storage part 35, and it is stored in the memory 32. Thus, according to the number of times n of communication operations, the k function tables are updated cyclically thereamoung. Next transmitting data is encoded with the thus-updated function table.

Next, reception processing will now be described.

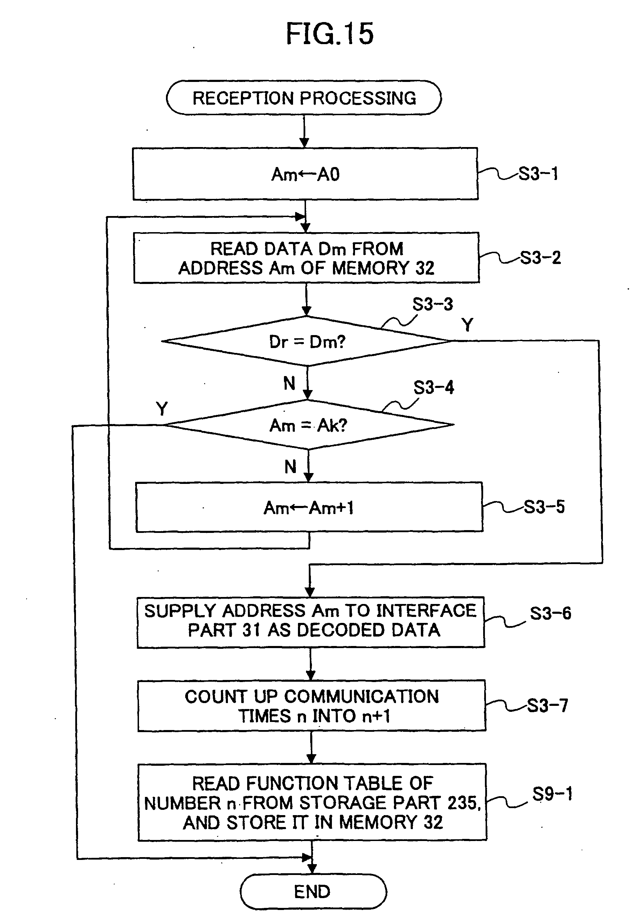

FIG. 15 is a processing flow chart showing the reception processing of the second variant of the communication device 27. The same step number is given to the same operation as in FIG. 8, and the duplicated description is omitted.

The control part 33 reads from the storage part 35 the function table of the identification number n which is the function table corresponding to the number of times n of communication operations updated at the step S3-7, and stores it in the memory 32. Then, when the number of times n of communication operations reaches the number k of the function tables, the function table of the identification number "1" is again read from the storage part 35 as in the transmitting processing, and it is stored in the memory 32. Thus, the k function tables are stored in the memory 32 cyclically according to the number of times n of communication operations. Then, the next transmission/reception data is decoded by the thus-updated function table.

Thus, according to the present embodiment, since the function table itself is not communicated between the server 11 and client 12, the secrecy performance can be improved. In addition, although the function table is selected according to the number of times of communication operations in the above-mentioned example, it is also possible to select the function table according to the communication data.

First, transmitting processing in a case of selectively updating the function table according to the communication data will now be described.

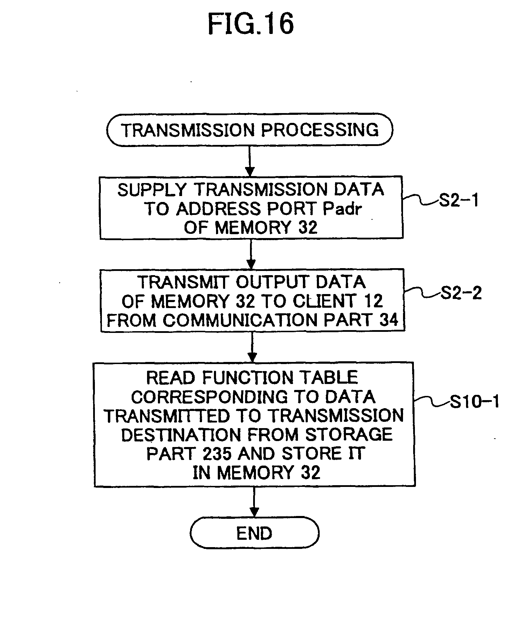

FIG. 16 shows the processing flow chart of transmitting processing of the third variant of the communication device 27. The same step number is given to the same operation as in FIG. 14, and the duplicated description is omitted.

Transmitting processing of this variant is such that, instead of the steps S2-3 and S8-1 shown in FIG. 14, a step S10-1 is performed. In the step S10-1, the function table corresponding to the data transmitted to the transmission destination is read from the storage part 35, and it is stored in the memory 32. When the function table is selected from the data, it is possible to select the function table using any of more significant or less significant bits of the data transmitted.

Thereby, whenever the data is transmitted, the function table used for the next transmission is updated. By this reason, the secrecy performance of the data can be improved.

Next, reception processing will be described.

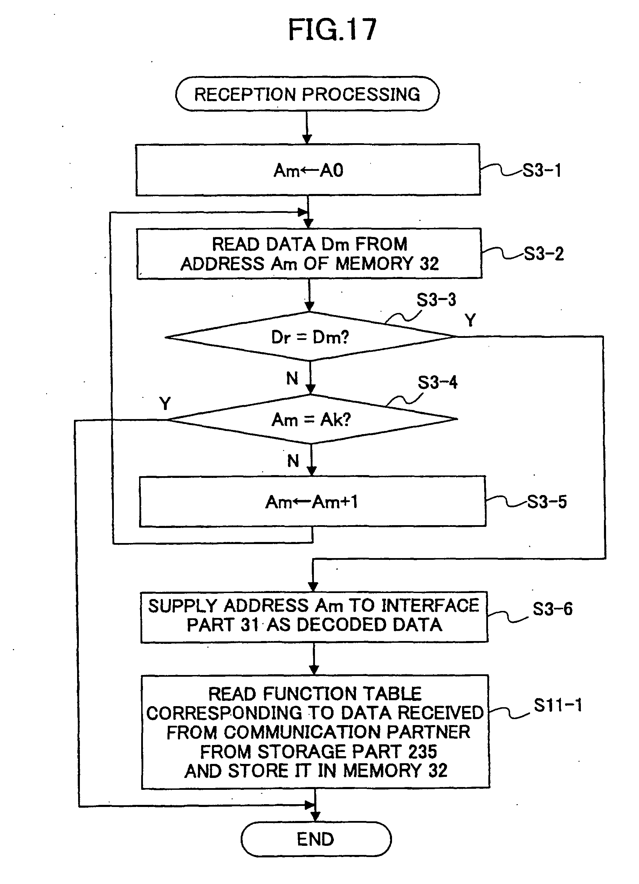

FIG. 17 shows a processing flow chart of reception processing of the third variant of the communication device 27. The same step number is given to the same operation as in FIG. 15, and the duplicated description is omitted.

The reception processing of this variant is such that, instead of the steps S3-7 and S9-1 shown in FIG. 15, a step S11-1 is performed. The step S 11-1 reads the function table according to the data received from the communication partner as in the time of transmission, from the storage part 35, and stores it in the memory 32.

By the above processing, after the data decoding, the same function table as the function table updated at the time of the data transmission from the communication partner can be obtained, and, thus, the same function table can be shared with the communication partner.

In addition, although the coefficient of the function table or the selection thereof is performed according to the number of times of data communication operations, or the communication data in the above-mentioned example, it is also possible to update the function table in a manner of combining these factors. That is, it is possible to combine a plurality of manners of updating processing in which the updating methods for the function table are different, for each communication operation. For example, for each communication operation, the processing which updates the function table in use of the number of times of data communication operations as a coefficient, the processing which selects one function table from the plurality of function tables according to the number of times of data communication operations, the processing which updates the function table in use of the communication data as a coefficient, and the processing which selects one function table from the plurality of function tables according to the communication data, are performed cyclically thereamong.

Furthermore, although the encoded data is transmitted with the function table stored in the memory 32 in the above-mentioned example, it is also possible to combine the updating processing with the plurality of updating manners for a single unit of data. That is, after further updating or selecting the function table in use of the encoded data, the data is transmitted to the communication partner. On the reception side, the function table is updated with the data which is decoded from the data transmitted from the communication partner, and after that, decoding is further made therewith, thereby, it being possible to obtain the original data.

Although the present embodiment described above is for a case where data is communicated between the server 11 and the client 12, other application can also be made. For example, the present invention may also be applied to a case where communications are made between an input apparatus and a host apparatus at a time of performing authentication, or so.

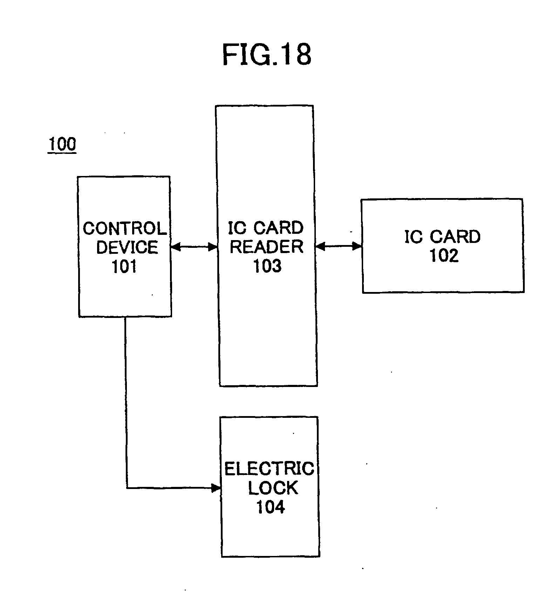

FIG. 18 is shows an example of application of the present invention.

An unlocking system 100 will now be described.

The unlocking system 100 of this example of application is configured to include a control device 101, an integrated circuit (IC) card 102, an IC card reader 103, and an electric lock 104. The control device 101, corresponding to the server 11 in the above-mentioned embodiment, controls and unlocks the electric lock 104, when, after performing of authentication with an ID and a password, the authentication is passed. Moreover, the integrated circuit card 102 corresponds to the client 12 in the embodiment, an ID and a password are stored there, and are used as a key for unlocking the electric lock 104. The integrated circuit card 102 is inserted into the IC card reader 103, and communicates with the control device 101.

If the integrated circuit card 102 is inserted into the IC card reader 103, as in the above-mentioned embodiment, the function table common between the control device 101 and the integrated circuit card 102 is set. Since the integrated circuit card 102 is thus set, it enciphers the ID with the function table and transmits it to the control device 101. When the ID is transmitted to the control device 101 from the integrated circuit card 102, the function table is updated without exchange of the data between the control device 101 and the integrated circuit card 102.

The integrated circuit card 102 enciphers the password with the thus-updated function table, and transmits it to the control device 101.

The control device 101 performs authentication based on the ID and the password which are supplied from the integrated circuit card 102. The control device 101 unlocks the electric lock 104, when the authentication is passed.

Thus, the ID and password are enciphered with the different function tables, and are transmitted to the control device 101. Thereby, the secrecy performance on the ID and password can be improved.

In addition, it is also possible, before transmitting the ID and password, they are enciphered with the function table which has been updated several times. Thereby, the secrecy performance on the ID and password can be improved further.

In addition, although the function table is used as calculation means in the above-mentioned example, it is also possible to apply an ordinary calculation program to perform encryption and decryption.

Moreover, although the function is updated based on the number of times of communication operations or the communication data, it is not necessary to be limited thereto and it is possible to update the same, in the present embodiment, using information on the outside sharable between the transmission side apparatus and reception side apparatus. The outside information sharable is public information, such as for example, time information, weather information, or information concerning the television broadcast. Furthermore, it is possible to update the same using clock information inside the communication apparatus, or so. Moreover, it is possible to update the function with a combination of the external information sharable between the transmission side apparatus and reception side apparatus, the number of times of communication operations, and the communication data.

For example, the function may be such as y1 = f1(x1, x2, x3) There, the variable x1 is the number of times of communication operations, x2 is the communication data and x3 is the external real-time information such as whether information, television broadcast information, or so.

Moreover, it is also possible that such a function as that y2 = f2(x1, x2, x3, x4) may be applied, wherein the time information x4 is added to the above-mentioned variables x1 through x3. Furthermore, it is also possible to apply a function, such as a function of y3 = f3(y1, y2, x6).

Moreover, it is also possible that, based on the external information, etc., the functions y1 through y3 are used alternately.

### [Second embodiment]

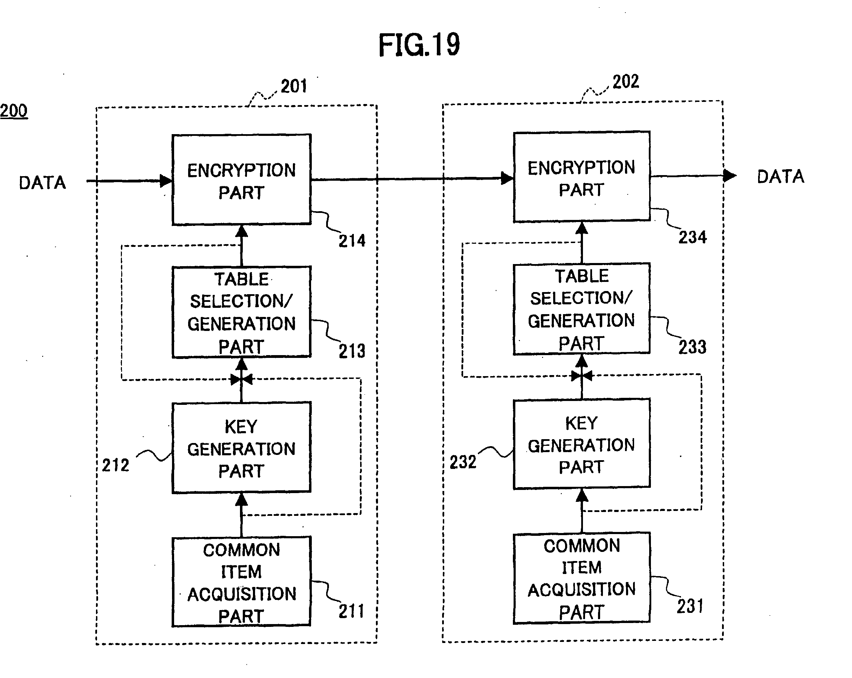

FIG. 19 shows a block configuration view of a second embodiment of the present invention.

A communication system 200 of the present embodiment includes a transmitting apparatus 201 and a receiving apparatus. The transmitting apparatus 201 includes a common item acquisition part 211, a key generation part 212, an encryption table selection/generation part 213, and an encryption part 214. The common item acquisition part 211 acquires an item which is common with the receiving apparatus 202 from whether information, time information, a random number obtained from a pseudo random number generator which generates a random number which is common between the transmission and reception ends, or so.

The common item acquired with the common item acquisition part 211 is supplied to the key generation part 212. The key generation part 212 generates a key by performing various calculation, such as, multiplying a coefficient, adding a constant, or so, to the common item supplied from the common item acquisition part 211, or generates a key by selecting a function from among a previously set plurality of functions according to the common item, and substituting another common item thereto. The key thus generated by the key generation part 212 is supplied to the table selection/generation part 213.

The table selection/generation part 213 generates a new table while selecting a table for enciphering data based on the key thus supplied from the key generation part 212.

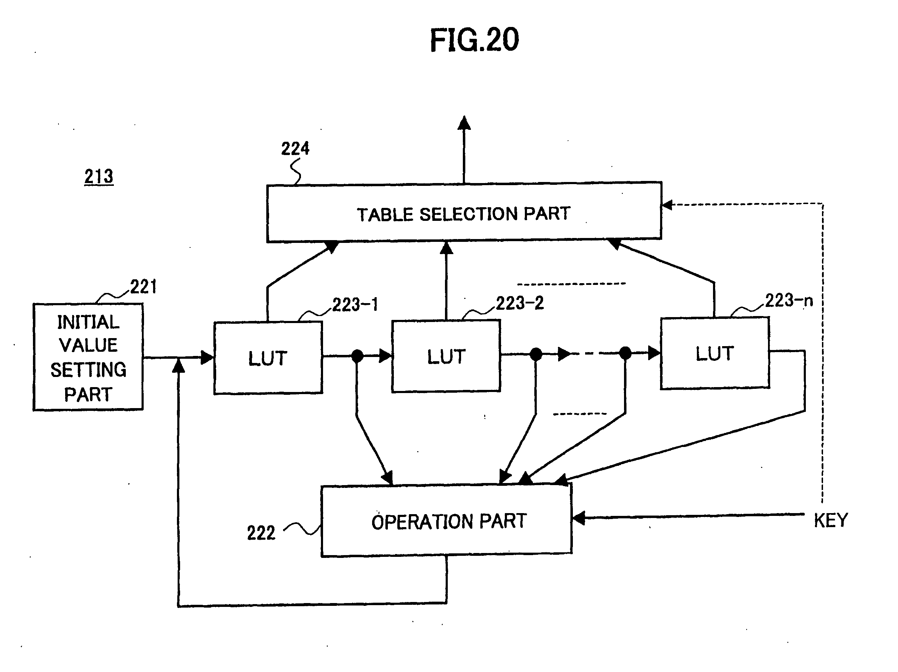

FIG. 20 shows a block configuration view of the table selection/generation part 213.

The table selection/generation part 213 includes an initial value setting part 221, an operation part 222, a look-up tables (LUTs) 223-1 through 223-n, and a table selection part 224. The initial value setting part 221 sets an initial table as the look-up table 223-1 at a time of a communication start, or so.

While the initial table is thus set as the initial value setting part 221 at a time of starting, operation processing is carried out in the operation part 222, and a thus-newly created table is set as the look-up table 223-1. The table set as the look-up table 223-1 last time is set to the look-up table 223-2. Similarly, sequentially, the table set as the front look-up table is set, and thus the table set as the front look-up table 223-(n-1) is then set as the look-up table 223-n.

The tables thus set as the look-up tables 223-1 through 223-n are supplied to the operation part 222 and the table selection part 224.

While the tables are thus supplied from the look-up tables 223-1 through 223-n to the operation part 222, the key is supplied from the key generation part 212 thereto. The operation part 222 generates a new table by, for example, summing the plurality of tables obtained from the look-up tables 223-1 through 223-n, and then, multiplying the thus-obtained table with the key.

The operation in the operation part 222 is not necessary to be limited to this, and it is also possible to set a nonlinear transition function. The table can be made to grow in a chaos manner by setting up the nonlinear transition-function. Thus, even if the table may be obtained, since the table thus grows in a chaos manner, it becomes impossible to decipher the code with the thus-acquired table, and thus, the code cannot be decoded easily.

The table which is calculated in the operation part 222 and newly created is set as the look-up table 223-1 as an encryption key. At this time, the table which is set as the look-up table 223-1 is then set as the look-up table 223-2, and, the table set as the look-up table 223-2 is then set as the look-up table 223-3. Similarly, sequentially, the table is set as the following look-up table, and the table of look-up table 223-(n-1) is then set as look-up table 223-n. Moreover, the table set as look-up table 223-n is then discarded.

The n tables set as the look-up tables 223-1 through 223-n are supplied, and, also, the key is supplied to the table selection/generation part 224 from the key generation part 212. The table selection/generation part 224 selects any one table among these n tables set as the look-up tables 223-1 through 223-n according to the key supplied from the key generation part 212. The table thus selected by the table selection/generation part 224 is supplied to the encryption part 214 as the encryption key.

The selected table is supplied from the table selection/generation part 224, and also, transmitting data is supplied to the encryption part 214. The encryption part 214 enciphers the transmitting data, based on the selected table supplied from table selection/generation part 213. A specific manner of the encryption is such as to encipher the data, by carrying out matrix operation between the selected table and the data, only adding, multiplying, or acquiring the data at a position corresponding to the data from the selected table. The manner of the encryption is not necessary to be limited thereto, and it is possible to apply various conventional enciphering methods.

Next, a receiving apparatus will be described.

The receiving apparatus includes a common item acquisition part 231, a key generation part 232, a table selection/generation part 233, and a decryption part 234. The common item acquisition part 231 performs the same operation as that in the common item acquisition part 211 of the transmitting apparatus 201, and acquires the item common with the common item acquisition part 211. The key generation part 232 performs the same operation as that in the key generation part 212 of the transmitting apparatus 201, and acquires the same key as that in the transmitting apparatus 201.

The table selection/generation part 233 has the configuration same as that of the table selection/generation part 213, operates in the same manner, and thereby, the same table as that in transmitting apparatus 201 is generated and selected. The decryption part 234 decrypts the original data based on the table thus selected in the table selection/generation part 213.

According to the present embodiment, since the table changes one after another every data transmission operation, or as the time progresses, the code cannot be deciphered easily. Moreover, since the table is calculated one by one and generated based on the initial table, even if an intermediate table may be known, the following table cannot be acquired. That is, the table cannot be acquired unless the initial table occurring at a time of communication starting and the calculation method are leaked. Moreover, the code cannot be deciphered, unless the key is acquired, even if the initial table and the operation method are leaked, since the table is selected by the key or the operation method for the table changes therewith. Furthermore, the code cannot be deciphered, unless the common item is known, since the key uses the common item, such as the weather or time. Moreover, since the table can be made grow up in a chaos manner by carrying out the nonlinear transition of the table. Accordingly, even if the table is acquired and the code can be decoded partially, the code is enciphered with the table which is changed at a next moment. Accordingly, the decipherment of the code becomes very difficult.

In addition, although the key is acquired by the common item acquisition parts 211 and 231 in the present embodiment, it is not necessary to be limited thereto, and it is possible to make decipherment of the code more difficult by embedding the key in the table, or carrying out self-generation of the key from the table.

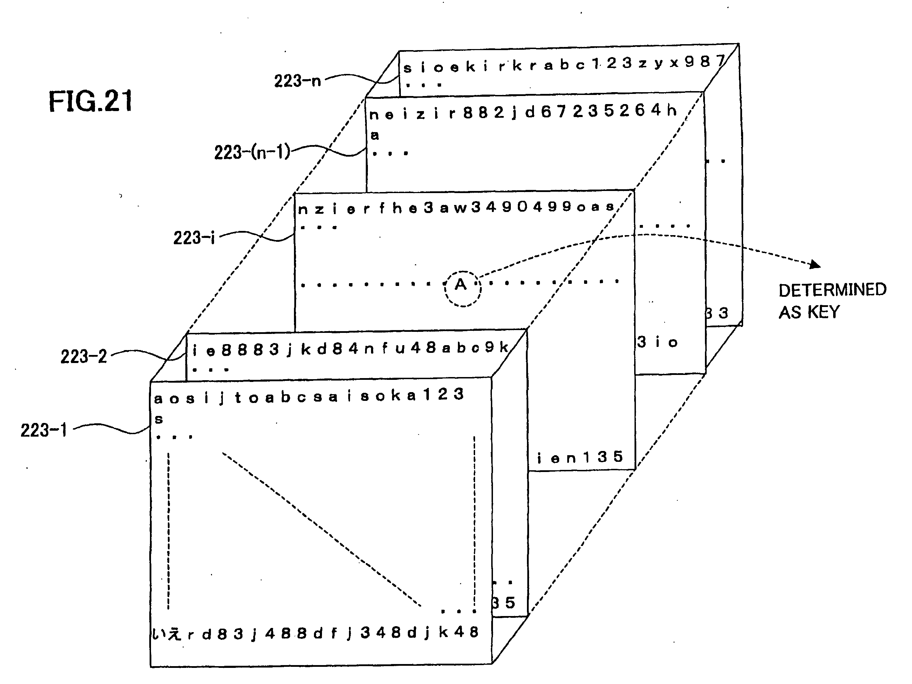

FIG. 21 shows an operation diagram of a variant of the key generation method.

As shown in FIG. 21, a setting is previously made such that a character "A" which is the m-th character of the i-th table 223-i should be used as a key from among the look-up tables 223-1 through 223-n, and by using this "A" as the key, the table can be selected or it can also be used as a coefficient for generation of a following table.

Furthermore, the table and the character number are determined based on the weather information or time information, and the character is extracted with the thus-determined table according to the thus-determined character number. Then, the thus-obtained key may be used for selection of a coefficient or function for the next table generation, or so. Moreover, although the function is mainly updated in the embodiment, it is not necessary to be limited to the function, and it is also possible to change a protocol instead of the function. Moreover, it is possible to use a combination of conversions with the function and protocol. Since the generation process for the self-generating key becomes more complicated by using a combination of conversions with the function and protocol, decipherment of the code becomes difficult further.

Moreover, in the present embodiment, the plurality of same tables are owned by the transmission and reception side. Thereby, by performing communications with adding table selection information to the communication data, selecting of the same table between the transmission and reception side can be achieved, and therewith encryption and decryption are performed. Thereby, it is possible to achieve asynchronous encryption and decryption.

### [Third embodiment]

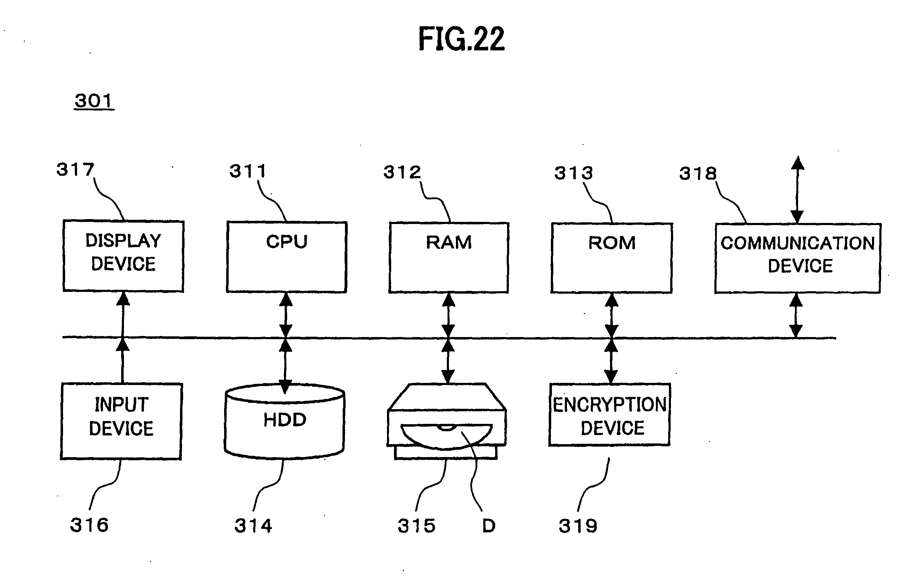

FIG. 22 shows a system configuration view of a third embodiment of the present invention.

The system of the present embodiment is an information processing system. The information processing system 301 of the present embodiment is made of an ordinary personal computer, and thus includes a CPU (central processing unit) 311, a RAM (random access memory) 312, a ROM (read only memory) 313, a HDD (hard disk drive) 314, a CD-ROM (compact disk-ROM) drive 315, an input device 316, a display 317, a communication device 318, and an encryption device 319.

The CPU 311 cooperates with the encryption device 319 to perform encryption processing with a program for encryption installed in the HDD 314. The RAM312 is used as a work memory area of the CPU 311. A BIOS (basic input/output system) and various setting information are stored in the ROM 313, and processing therewith is performed at a time of starting of the information processing system 301.

In the HDD 314, the program for encryption which is used by the encryption device 319 for performing encryption processing, original data, encryption data, decoded data, a table for encryption, etc. are stored. The CD-ROM drive 315 is equipped with a compact disc D, and a program recorded in the compact disc D is read thereby. The program for encryption is provided for example, with the compact disc D, is then installed in the HDD314 from the CD-ROM drive 315, and is used. It is also possible to provide the program for encryption from a network through the communication device 318.

The input device 316 includes a keyboard, a mouse, etc., and is used for starting of the encryption program, or selection of original data which should be enciphered. The display 317 includes a CRT (cathode ray tube) or an LCD (liquid crystal device), and displays information, such as original data, decoded data, or a progress situation of encryption.

The communication device 318 includes a modem, a terminal adapter, a router, etc., and is an apparatus for performing communications with another information processing apparatus through the network.

The encryption device 319 is a board for enciphering original data supplied from the program for encryption, or decoding the encrypted data supplied from the program for encryption.

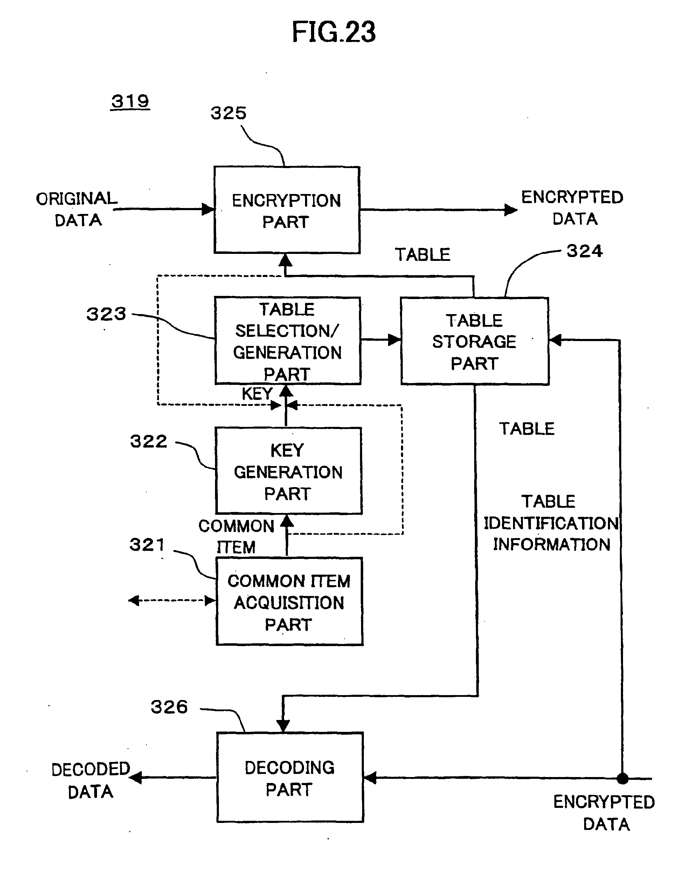

FIG. 23 shows a block configuration view of the encryption device 319.

The encryption device 319 includes a board connectable with a PCI (peripheral component interconnect bus), and includes a common item acquisition part 321, a key generation part 322, a table selection/generation part 323 for encryption, a table memory part 324 for encryption, an encryption part 325, and a decryption part 326.

The common item acquisition part 321 acquires a common item from weather information, time information, or a random number, which is common between the transmission and reception ends, obtained by a pseudo random number generator which generates a common random number common with the communication partner.

The common item acquired by the common item acquisition part 321 is supplied to the key generation part 322. The key generation part 322 generates a key from the common item acquired by the common item acquisition part 321. The key is generated through performance of various operation on the common item supplied by the common item acquisition part 321, such as multiplying a coefficient, adding a constant, or so. Moreover, the key is generated by selection of a function according to the common item from a plurality of previously set functions, and substituting another common item thereto.

The key generated by the key generation part 322 is supplied to the table selection/generation part 323. The table selection/generation part 323 generates a new table while selecting a table for enciphering data based on the key thus supplied from the key generation part 322.

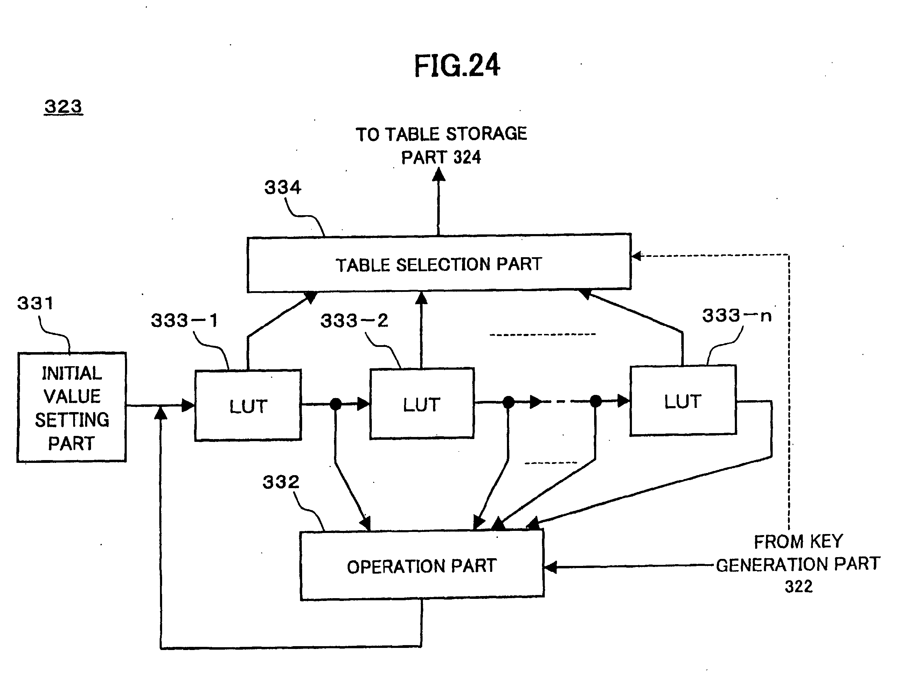

FIG. 24 shows a block configuration view of the table selection/generation part 323. The table selection/generation part 323 includes an initial value setting part 331, an operation part 332, look-up tables 333-1 through 333-n, and a table selection part 334. The initial value setting part 331 sets an initial table as the look-up table 333-1 at a time of a communication start, etc.

While the initial table is thus set by the initial value setting part 331 at a time of starting, operation processing is carried out thereon by the operation part 332, and thus a newly created table is set to the look-up table 333-1. The table set as the look-up table 333-1 last time is then set to the look-up table 333-2. Similarly, in sequence, the table set as the front look-up table is then set, and thus the table set as the front look-up table 333-(n-1) is then set as the look-up table 333-n.

The tables set as the look-up tables 333-1 through 333-n are supplied to the operation part 332 and the table selection part 334. While the tables are thus supplied from the look-up tables 333-1 through 333-n to the operation part 332, the key is supplied thereto from the key generation part 322. The operation part 332 generates a new table by carrying out multiplication of the key to a table obtained from summing the respective matrixes of the plurality of tables from the look-up tables 333-1 through 333-n. The operation in the operation part 332 is not necessarily limited to this, and a nonlinear transition function may be applied, for example. The table can be made to grow up in a chaos manner by setting a nonlinear transition function. Thereby, even if the table is acquired, since the table grows in a chaos manner, it becomes impossible to decipher the code with the acquired table, and thus the code cannot be decoded easily.

The table which is calculated in the operation part 332 and is thus newly created is then set as the look-up table 333-1. At this time, the table which is thus set as the look-up table 333-1 is then set as the look-up table 333-2, and the table thus set as the look-up table 333-2 is then set as a look-up table 333-3. Similarly, in sequence, the table is set as the following look-up table, and the table of the look-up table 333-(n-1) is set as the look-up table 33-n. Moreover, the table set as the look-up table 333-n is discarded.

The n tables set as the look-up tables 333-1 through 333-n are supplied, and, also, the key is supplied from the key generation part 322, to the table selection part 334. The table selection part 334 selects any one table among these n tables set as the look-up tables 333-1 through 333-n according to the key from the key generation part 322.

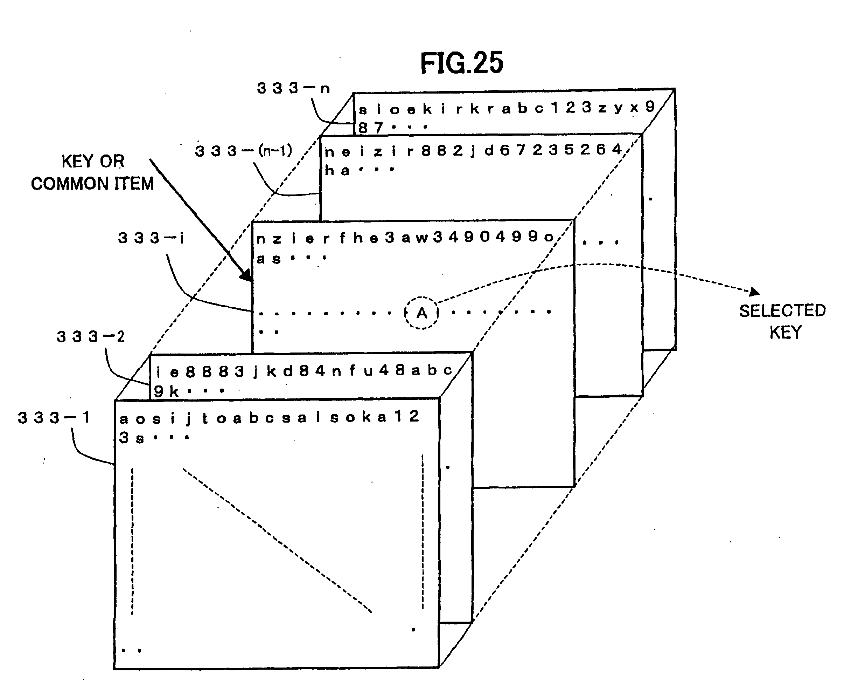

FIG. 25 shows an operation diagram of the key selection/generation part 323. As shown in FIG. 25, a setting is previously made such that a character "A", the m-th character of the i-th table 333-i from among the look-up tables 333-1 through 333-n should be used as a key, and by using this "A" as the key, the table can be selected or it can be used as a coefficient for generation of the following table.

Furthermore, the table and the character number may be determined from weather information or time information, the character of the thus-determined character number in the thus-determined table may be thus extracted and used for selecting the table or used as a coefficient for generating the following table, or used for selecting the function for generating the table.

The table selected by the table selection part 334 is supplied to the encryption part 325 while it is supplied to the table memory part 324 and stored therein. The table memory part 324 may be set in the HDD314, and managed by the program for encryption.

The selected table is supplied from the table selection/generation part 323, and also, the transmitting data is supplied to the encryption part 325. The encryption part 325 enciphers the original data based on the table selected by the table selection part 334 and stored in the table memory part 324. A manner of the encryption is such as that achieved, for example, by carrying out matrix operation between the selected table for encryption and the data, by simply adding, or carrying out multiplication, or by acquiring data from the table for encryption at the position corresponding to the data. The manner of encryption is not necessarily limited thereto, and various conventional enciphering methods may be applied.

The encrypted data encrypted in the encryption part 325 is read from the encryption device 319 by the program for encryption, and is stored by the HDD 314 as an intermediate file. The table identification information for identifying which table is used for the encryption is added to the intermediate file stored by the HDD 314. At a time of decryption, the intermediate file to be decoded is read from the HDD 314 by the program for encryption, and is supplied to the encryption device 319. With the encryption device 319, search is made in the table memory part 324 based on the table identification information added to the intermediate file for the table for encryption used at the time of encryption, which table is thus read from the table memory part 324, and is supplied to the decryption part 326.

The decryption part 326 decodes the data with the table for encryption supplied from the table memory part 324. As a manner of decoding, a calculation is made of substituting the table for encryption into an inverse function of the function used at the time of encryption, for example, and thus, the original data is decoded therefrom.

The data decoded in the decryption part 326 is read from the encryption device 319 by the program for encryption, and is stored by the HDD 314. Or the RAM3 12 stores it and it is used for processing by the CPU 311.

As mentioned above, according to the present embodiment, the data can be enciphered and it can be stored in the HDD 314 as the intermediate file. It is not possible to easily decode the data even if the data is stolen as a result of the encryption of important data and storage thereof in the HDD 314. Thereby, the secrecy performance of data can be improved.

According to the present embodiment, since the table changes one after another every data transmission operation, or as the time progresses, the code cannot be deciphered easily. Moreover, since the table is calculated one after another and generated based on the initial table, even if an intermediate table may be known, the following table cannot be acquired. That is, the table cannot be acquired unless the initial table occurring at a time of communication starting and the calculation method are leaked. Moreover, the code cannot be deciphered, unless the key is acquired, even if the initial table and the operation method are leaked, since the table is selected by the key or the operation method for the table changes therewith. Furthermore, the code cannot be deciphered, unless the common item is known, since the key uses the common item, such as the weather or time. Moreover, since the table can be made grow up in a chaos manner by carrying out the nonlinear transition of the table. Accordingly, even if the table is acquired and the code can be decoded partially, the code is enciphered with the table which is changed at a next moment. Accordingly, the decipherment of the code becomes very difficult.

In addition, although the key is acquired by the common item acquisition parts 321 in the present embodiment, it is not necessary to be limited thereto, and it is possible to make decipherment of the code more difficult by embedding the key in the table, or carrying out self-generation of the key from the table.

According to the present embodiment, the original data can be enciphered and then be stored. Moreover, the data enciphered and stored can be communicated using various types of communication apparatus 318.

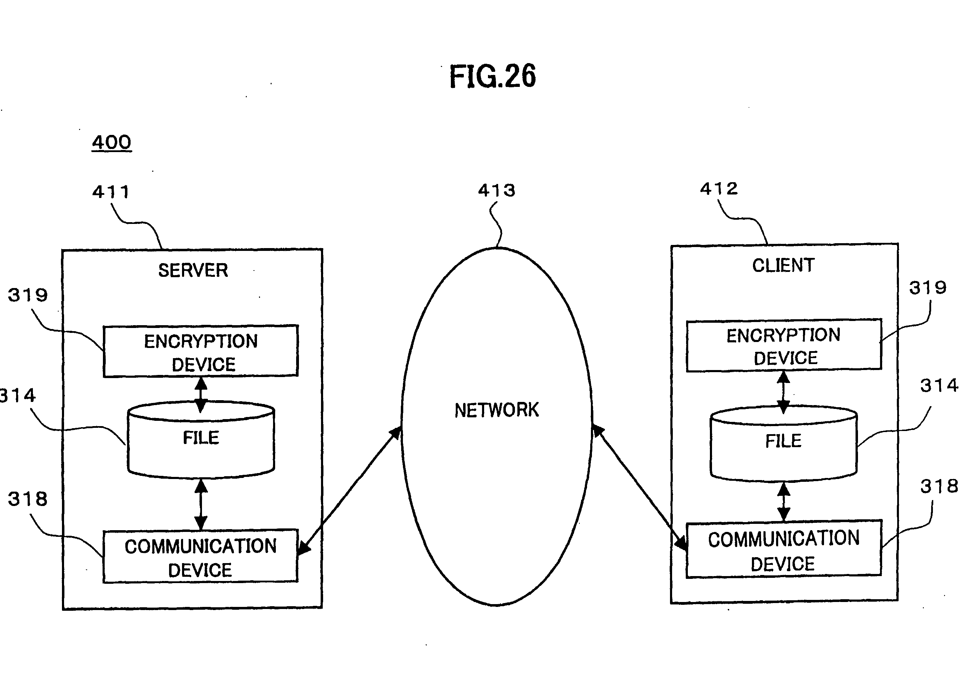

FIG. 26 is a system configuration view of an example of application of the information processing system 301.

A system 401 of this example of application is configured such that communications between a server 411 and a client 412 is performed through a network 413. The server 411 and the client 412 are configured to each have the same configuration as the information processing system 301 shown in FIG. 22 through FIG. 24, and the initial value, common item, and key generation method, the operation method, etc. are shared mutually.

The server 411 enciphers the original data to be transmitted to the client 412 with the above encryption device 319, and stores it as the intermediate file into the HDD314. The intermediate file stored by the HDD 314 is then supplied to the client 412 through the network 413 by the communication device 318.

In the client 412, the communication device 318 receives the encrypted data from the server 411, and stores it in the HDD 314 as the intermediate file. The encrypted data stored by the HDD 314 as the intermediate file is decoded into the original data with the encryption device 319, and is utilized by the client 412.

According to this example of application, the data enciphered by the encryption device 319 is stored as the intermediate file in the HDD 314, and is transmitted via the existing network 413 such as a LAN (local area network) with the existing communication device 318. Accordingly, the encryption is easily applicable.

In addition, according to the present embodiment, since the look-up table changes dynamically, the decipherment of the code becomes difficult even if the key or the look-up table are acquired temporarily. Therefore, the secrecy performance can be improved.

Moreover, according to the present embodiment, as information at a predetermined position in the table is used as a key, the key cannot be obtained without obtaining the table. Accordingly, decipherment of the code becomes difficult, and thus, the secrecy performance can be improved.

### [Fourth embodiment]

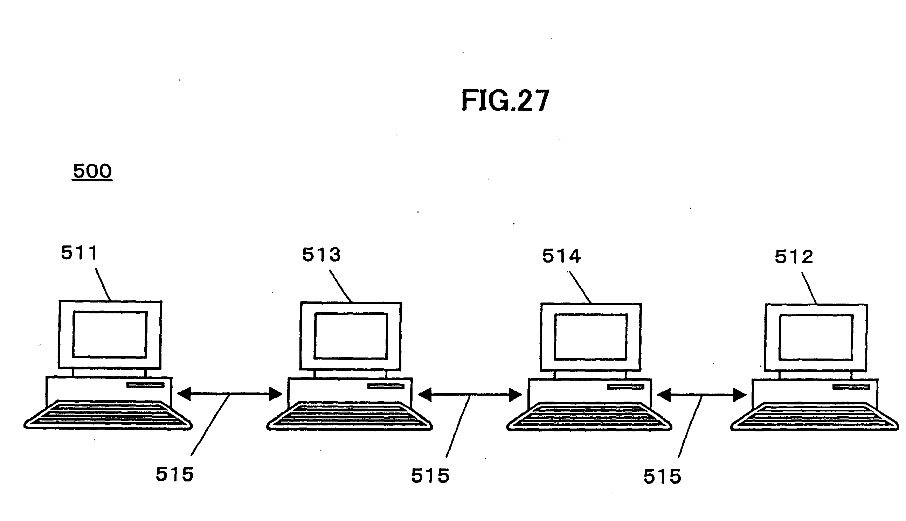

FIG. 27 shows a system configuration view of a fourth embodiment of the present invention. For the present embodiment, a description is made for a system in which, while two information processing apparatuses are used for relay communications, communications are made between a communication source information processing apparatus and a communication destination information processing apparatus, in order to simplify the explanation.

A communication system 500 of the present embodiment includes information processing apparatuses 511 through 514. The information processing apparatuses 512 through 514 are connected through a network 515. The information processing apparatus 511 and the information processing apparatus 512 performs relaying between the information processing apparatuses 513 and 514, and encryption communications are performed therebetween.

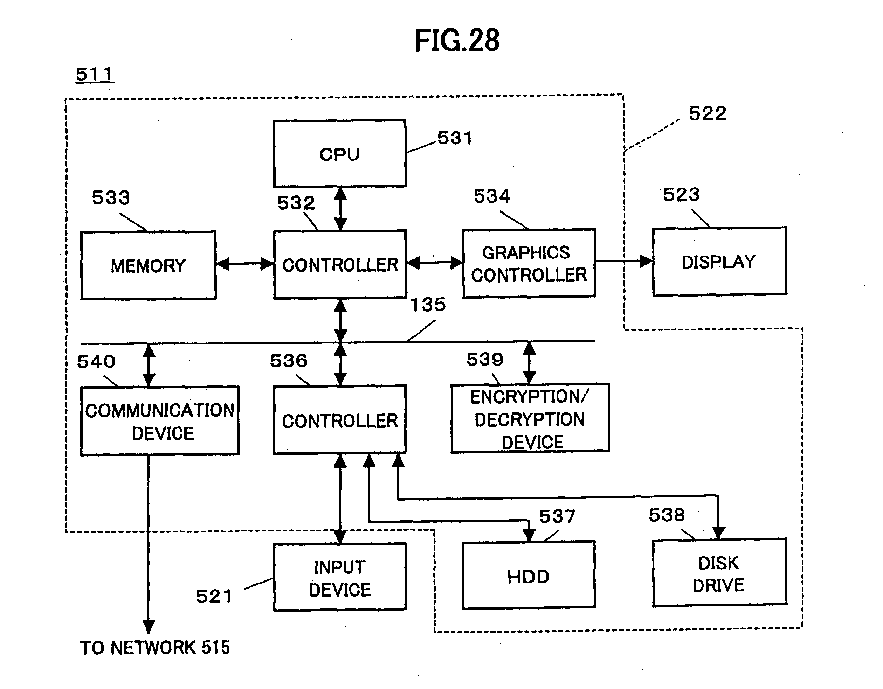

FIG. 28 shows a block configuration view of the information processing apparatus 511.

The information processing apparatus 511 is made of a personal computer system, and includes an input device 521, a processing part 522, and a display 523. The input device 521 includes a keyboard and a mouse, and performs input of commands or data in the processing part 522. The display 523 displays a processing result of the processing part 522.

The processing part 522 includes a CPU 531, a controller 532, a memory 533, a graphics controller 534, a bus 535, a controller 536, a hard disk drive 537, an exchangeable disk drive 538, an encryption device 539, and a communication device 540.

The CPU 531 performs processing according to a program. The controller 532 performs data exchange between the CPU 531, memory 533, graphics controller 534, and bus 535. The memory 533 is used as a work memory area of the CPU 531. The graphics controller 534 processes data processed by the CPU 531, changes it into display data, and supplies it to the display 523. The display 523 displays a page according to the display data from the graphics controller 534.

The bus 535 is a bus based on the PCI (peripheral component interconnect) standard. The controller 536, encryption/decryption device 539, and communication device 540 are connected to the bus 535.

The input apparatus 521, the hard disk drive 537, and the exchangeable disk drive 538 are connected to the controller 536 as well as the bus 535. The controller 536 controls the input apparatus 521, the hard disk drive 537, the exchangeable disk drive 538, and the bus 535, and performs data exchange.

A program and data are stored by the hard disk drive 537. The exchangeable disk drive 538 is, for example, a CD-ROM (compact disk-read only memory) drive, and drives a CD-ROM disk in which a program and data are stored.

The encryption/decryption device 539 is a board connected to the bus 535, and enciphers data or decodes the enciphered data. The data enciphered with the encryption/decryption device 139 is supplied to the communication device 540. The communication device 540 is an apparatus for performing communications with the information processing apparatus 513 through the network 514.

The encryption/decryption device 539 will now be described in detail.

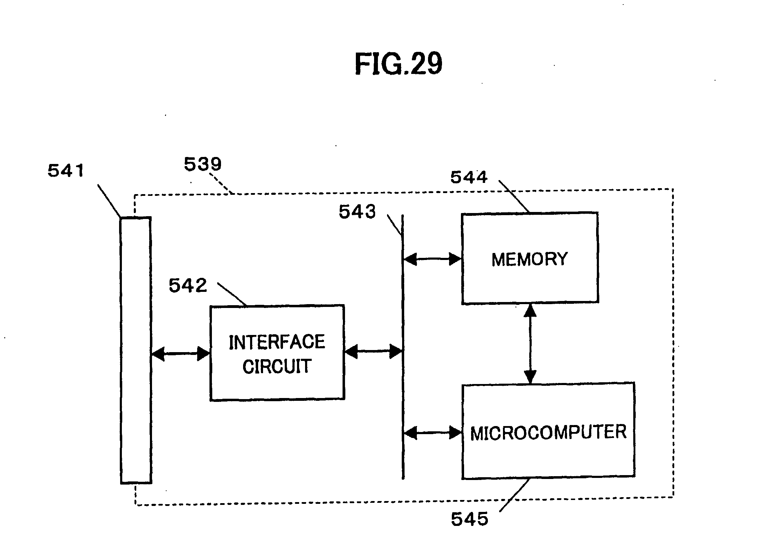

FIG. 29 shows a block configuration view of the encryption/decryption device 539.

The encryption/decryption device 539 is a PCI board which is connected to the bus 535 and used in this state, and is configured to have an encryption/decryption processing chip C and a connector 541 mounted on a printed wiring board B. The connector 541 is connected to the PCI bus 535. The connector 541 is also connected to the encryption/decryption processing chip C on the printed wiring board B.

The encryption/processing chip C includes a decryption interface circuit 542, a bus 543, a memory 544, and a microcomputer 545. The interface circuit 542 is connected to the connector 541. The interface circuit 542 is formed between the connector 541 and the internal bus 543, and acts as an interface between the PCI bus 535 and the bus 543. The memory 544 and microcomputer 545 are connected to the bus 543. An operation result of predetermined operation performed on input data is stored in the memory 544 at an address corresponding to the input data.

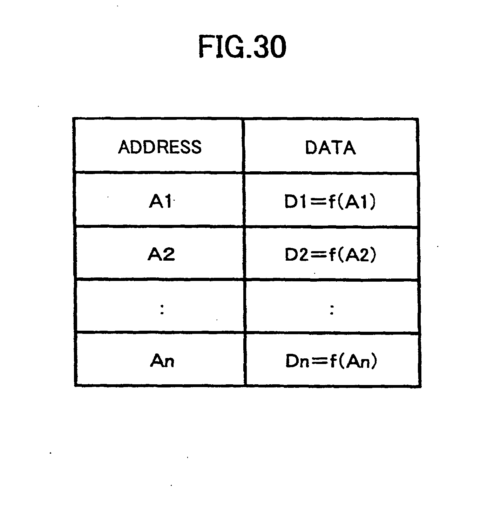

FIG. 30 shows a data configuration view of the memory 544.

In the memory 544, an operation result f(Ai) calculated by a predetermined function f(x) with an address Ai as an input x, as data Di for the address Ai (i denotes an integer of 1 through n) is stored. The microcomputer 545 obtains the operation result f(x) by performing calculation on the data x with the predetermined function f by reading the data from the memory 544 with the data from the PCI bus 535 as the address therefor. This operation result f(x) is output as enciphered data of the data x.

The microcomputer 545 sets, as an initial function, data of the memory 544, i.e., the function f, based on common information which is obtainable in common between the transmission and reception ends, and after that, dynamically changes it based on the number of times of communication operations or the communication data. For example, the function f changes. Or, multiplication of a coefficient according to the number of times of communication operations is made with the function f. Updating of the function f is not necessarily limited to one by the number of times of communication operations or the communication data, and, it is possible that updating is made with common information which can be acquired in common among the information processing apparatuses 511 through 514, for example, weather information or so.

Thereby, the encryption/decryption can be performed without exchanging the key information for encryption, etc. between the transmission and reception ends. Thus, by the key information which is generated by itself in each of the transmission and reception ends, i.e., a self-generating key, encryption/decryption can be performed. Therefore, the secret performance of the data can be improved.

The processing for encryption with the encryption/decryption device 539 searches the memory 544 in use of the input data as the address therefor. Then, the data is read from the address corresponding to the input data of the memory 544. The read data is output as the encrypted data. Moreover, decryption processing searches first for the data stored in the memory 544 with the input data. Then, the address in the memory 544 at which the corresponding data exists is acquired. The acquired address is output as the decoded data. Thus, since the encryption/decryption device 539 can achieve encryption only by reading the data from the memory 544, encryption can be performed at high speed. Moreover, since decoding is achieved only by acquiring the address at which the data corresponding to the input data is stored from the memory 544, the decoding can be performed at high speed.

In addition, since the information processing apparatus 512 has the configuration same as that of the information processing apparatus 511, the duplicated description is omitted.

Next, the information processing apparatuses 513 and 514 will be described.

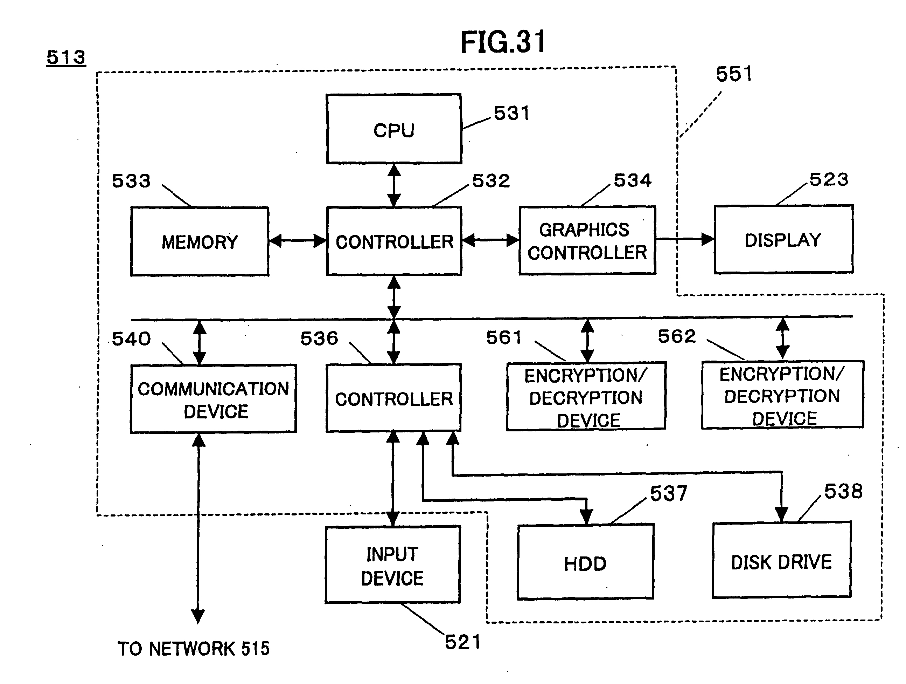

FIG. 31 shows a block configuration view of the information processing apparatus 513. The same reference numeral is given to the same configuration portion as in FIG. 28, and the duplicated description is omitted.

As for the information processing apparatus 513, the configuration of the processing part 551 is different from that in FIG. 28. In the processing part 551 of the information processing apparatus 513, the encryption/decryption device 539 is replaced by two encryption/decryption devices 561 and 562. In addition, the encryption/decryption devices 561 and 562 are configured to each have the same configuration as that of the encryption/decryption device 539. Accordingly, description of the encryption/decryption devices 561 and 562 is omitted.

The encryption/decryption device 561 of the information processing apparatus 513 decodes the encrypted data supplied from the information processing apparatus 511, and supplies it to the encryption/decryption device 562. The encryption/decryption device 561 enciphers the decoded data decoded by the encryption/decryption device 562, and supplies it to the information processing apparatus 511.

Therefore, the same data as the data stored by the memory 544 of the encryption/decryption device 539 of the information processing apparatus 511 is stored by the memory 544 of the encryption/decryption device 561. Further, when the memory 144 of the encryption/decryption device 539 of the information processing apparatus 511 is updated with the number of times of communication operations, or the communication data, the data of the memory 544 of the encryption/decryption device 561 is updated in the same manner.

The data decoded with the encryption/decryption device 561 is supplied to the encryption/decryption device 562. The encryption/decryption device 562 enciphers the data from the encryption/decryption device 561, and supplies it to the communication device 540.

Moreover, the encrypted data from the information processing apparatus 514 is supplied to the encryption/decryption device 562. The encryption/decryption device 562 decodes the encrypted data from the information processing apparatus 514, and supplies it to the encryption/decryption device 561.

Thereby, the same data as the data stored by the memory 544 of the encryption/decryption device 561 of the information processing apparatus 514 is stored by the memory 544 of the encryption/decryption device 562. Moreover, when the memory 544 of the encryption/decryption device 561 of the information processing apparatus 514 is updated with the number of times of communication operations or the communication data, the data of the memory 544 of the encryption/decryption device 561 is updated in the same manner.

Since a configuration of the information processing apparatus 514 is the same configuration as that of the above information processing apparatus 513, the duplicated description is omitted.

The encryption/decryption device 561 of the information processing apparatus 514 decodes the encrypted data supplied from the information processing apparatus 513, and supplies it to the encryption/decryption device 562. Moreover, the encryption/decryption device 561 enciphers the decoded data decoded with the encryption/decryption device 562, and supplies it to the information processing apparatus 512.

Thereby, the same data as the data stored by the memory 544 of the encryption/decryption device 562 of the information processing apparatus 513 is stored by the memory 544 of the encryption/decryption device 561. Moreover, when the memory 544 of the encryption/decryption device 562 of the information processing apparatus 513 is updated with the number of times of communication operations or the communication data, the data of the memory 544 the of encryption/decryption device 561 is updated in the same manner.

The data decoded with the encryption/decryption device 561 is supplied to the encryption/decryption device 562. The encryption/decryption device 562 enciphers the data from the encryption/decryption device 561, and supplies it to the communication device 540.

Moreover, the encrypted data from information processing apparatus 512 is supplied to the encryption/decryption device 562. The encryption/decryption device 562 decodes the encrypted data from the information processing apparatus 512, and supplies it to the encryption/decryption device 561.

Thereby, the same data as the data stored by the memory 544 of the encryption/decryption device 539 of the information processing apparatus 512 is stored by the memory 544 of the encryption/decryption device 562. Moreover, when the memory 544 of the encryption/decryption device 539 of the information processing apparatus 512 is updated with the number of times of communication operation or the communication data, the data of the memory 544 of the encryption/decryption device 562 is updated in the same manner.

Thus, according to the present embodiment, upon communications between the information processing apparatuses 511 and 512, the relay information processing apparatuses are used as to perform relaying, and, also, the encryption which is different for every communication path is achieved by making the encryption different for each of the information processing apparatuses 511 through 514, the enciphered data cannot be easily deciphered, and, thus the secrecy performance of the communications can be improved.

In addition, although the two relay information processing apparatuses 513 and 514 are used for the relay function in the communications performed between the information processing apparatus 511 and information processing apparatus 512 in the present embodiment, it is also possible to apply three or more relay information processing apparatuses for the relay function. Thereby, the decipherment of the code becomes more difficult.

Moreover, in the present embodiment, although the communication system of 1:1 is applied, it is also possible to apply a communication system of 1:N.

### [Fifth embodiment]

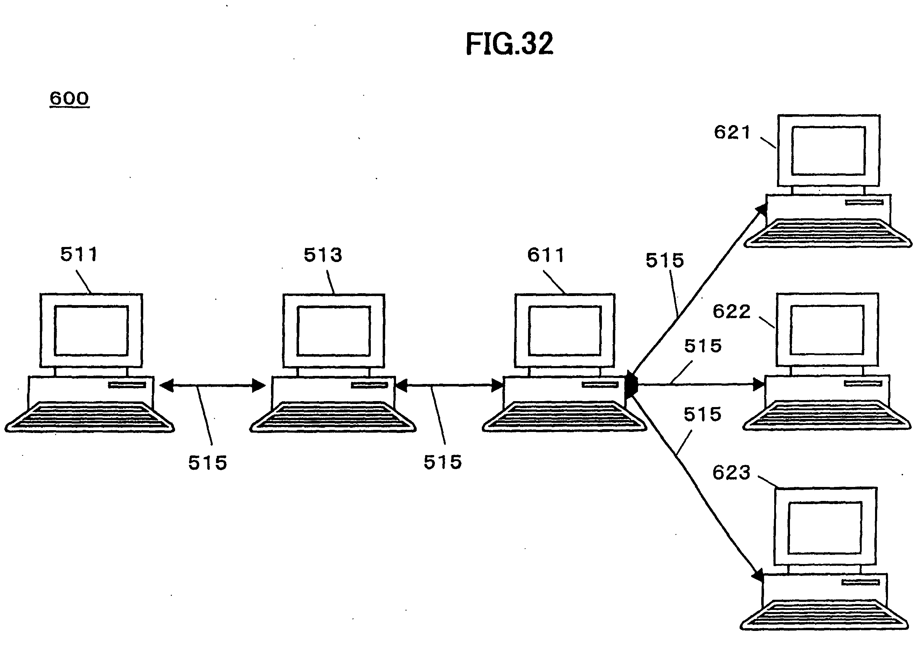

FIG. 32 shows a system configuration view of a fifth embodiment of the present invention. The same reference numeral is given to the same configuration portion as in FIG. 1, and the duplicated description is omitted. In addition, in order to simplify the description of the embodiment, a communication system of 1:3 is assumed here as an example.

The system of the present embodiment is a communication system. The communication system 600 of the present embodiment performs encryption communication of 1:3 between an information processing apparatus 511 and information processing apparatuses 621 through 623, while a relay information processing apparatus 611 performs communications with the information processing apparatuses 621 through 623. In addition, the information processing apparatuses 621 through 623 have the same configuration each as the information processing apparatus 511 shown in FIG. 29. Therefore, description of the information processing apparatuses 621 through 623 is omitted.

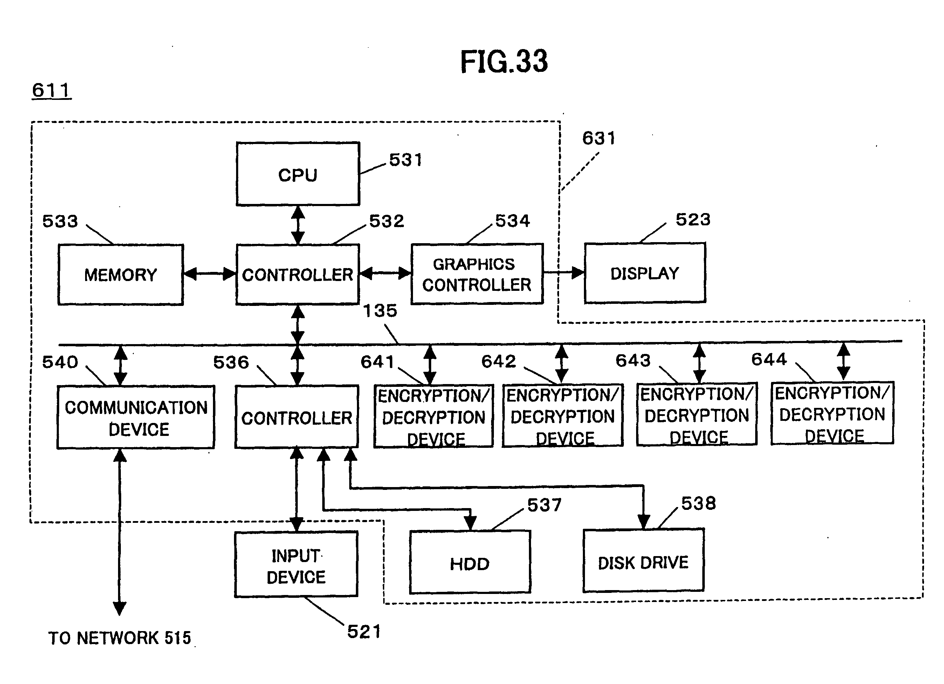

FIG. 33 shows a block configuration view of the information processing apparatus 611. The same reference numeral is given to the same configuration portion as in FIG. 31, and the duplicated description is omitted.

The information processing apparatus 611 of the present embodiment is different from the information processing apparatus in the configuration of the processing part 631 shown in FIG. 31.

In the information processing apparatus 611, instead of the encryption/decryption devices 561 and 562, encryption/decryption devices 641 through 644 are provided. The encryption/decryption device 641 performs encryption communications with the relay information processing apparatus 513. The encryption/decryption device 642 performs encryption communications with the information processing apparatus 621. The encryption/decryption device 643 performs encryption communications with the information processing apparatus 622. The encryption/decryption device 644 performs encryption communications with the information processing apparatus 623. In addition, since the encryption/decryption devices 641 through 644 have each the same configuration as that of the encryption/decryption device 539 shown in FIG. 31, the description thereof is omitted.

The information processing apparatus 611 decodes the encrypted data from the information processing apparatus 511 with the encryption/decryption device 641. The data decoded with the encryption/decryption device 641 can be distributed to either of the encryption/decryption devices 642 through 644 according to the address thereof. The encryption/decryption device 642 enciphers the data from the encryption/decryption device 641 by a first encryption key. The data enciphered by the encryption/decryption device 642 is transmitted to the information processing apparatus 621 by the communication device 540.

The encryption/decryption device 643 enciphers the data from the encryption/decryption device 641 by a second encryption key. The data enciphered by the encryption/decryption device 643 is transmitted to the information processing apparatus 622 by the communication device 540.

The encryption/decryption device 644 enciphers the data from the encryption/decryption device 641 by a third encryption key. The data enciphered by the encryption/decryption device 644 is transmitted to the information processing apparatus 623 by the communication device 540.

The encryption/decryption device 539 of the information processing apparatus 621 has the first encryption key common with the encryption/decryption device 642 of the information processing apparatus 611. In addition, the first encryption key is updated with the number of times of communication operations or the communication data. That is, the first encryption key changes dynamically.

The encryption/decryption device 539 of the information processing apparatus 622 has the second encryption key common with the encryption/decryption device 643 of the information processing apparatus 611. In addition, the second encryption key is updated with the number of times of communication operations or the communication data. That is, the second encryption key changes dynamically.

The encryption/decryption device 539 of the information processing apparatus 623 has the third encryption key common with the encryption/decryption device 644 of the information processing apparatus 611. In addition, the third encryption key is updated with the number of times of communication operations or the communication data. That is, the third encryption key changes dynamically.

According to the present embodiment described above, encryption can be achieved in use of the first through third encryption keys different from each other with the information processing apparatuses 621 through 623, respectively, the secret performance of the communications can be improved. Moreover, since the first through third encryption keys are always updated dynamically, the secrecy performance can be further improved.

Moreover, in the above-mentioned example, the encryption/decryption device is provided in each of the communication destination information processing apparatuses 621 through 623. However, the encryption communications same as those described above may be achieved by a single encryption/decryption device having a memory 144 which has a memory area divided for the respective ones of the communication destination information processing apparatuses 621 through 623, and setting the encryption keys for the respective division memory areas.

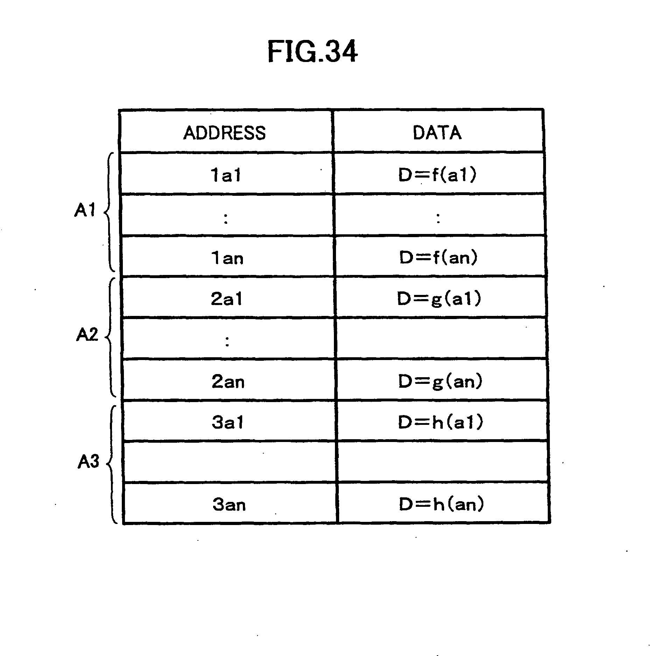

FIG. 34 shows a data configuration view of the memory 544 of a variant of the fifth embodiment of the present invention.

The memory 544 has a memory area divided into memory areas A1 through A3. In the memory area A1, encryption data for performing encryption communications with the first communication partner is stored. The encryption data, i.e., f(a1) through f(an), are, for example, results of calculation performed with a first function f with addresses "1a1 through 1an" used as input data. In addition, the first function f is updated at any time with the number of times of communication operations or the communication data. In addition, it is also possible to change the function itself with the number of times of communication operations, or the communication data.

In the memory area A2, encryption data for performing encryption communications with the second communication partner is stored. The encryption data, i.e., g(al) through g(an), are, for example, results of calculation performed with a second function g with addresses "2a1 through 2an" used as input data. In addition, the second function g is updated at any time with the number of times of communication operations or the communication data. In addition, it is also possible to change the function itself with the number of times of communication operations, or the communication data.

In the memory area A3, encryption data for performing encryption communications with the third communication partner is stored. The encrypted data, i.e., h(a1) through h(an), are, for example, results of calculation performed with a third function h with addresses "3a1 through 3an" used as input data. In addition, the third function h is updated at any time with the number of times of communication operations or the communication data. In addition, it is also possible to change the function itself with the number of times of communication operations, or the communication data.

The relay information processing apparatus 611 of the last stage distributes data to the communication destination information processing apparatuses 621 through 623 in the above-mentioned example. However, it is also possible that data is distributed to a plurality of relay information processing apparatuses at an intermediate position and after that, data is distributed to the communication destination information processing apparatuses, or, the data may be distributed to a plurality of relay information processing apparatuses.

### [Sixth embodiment]

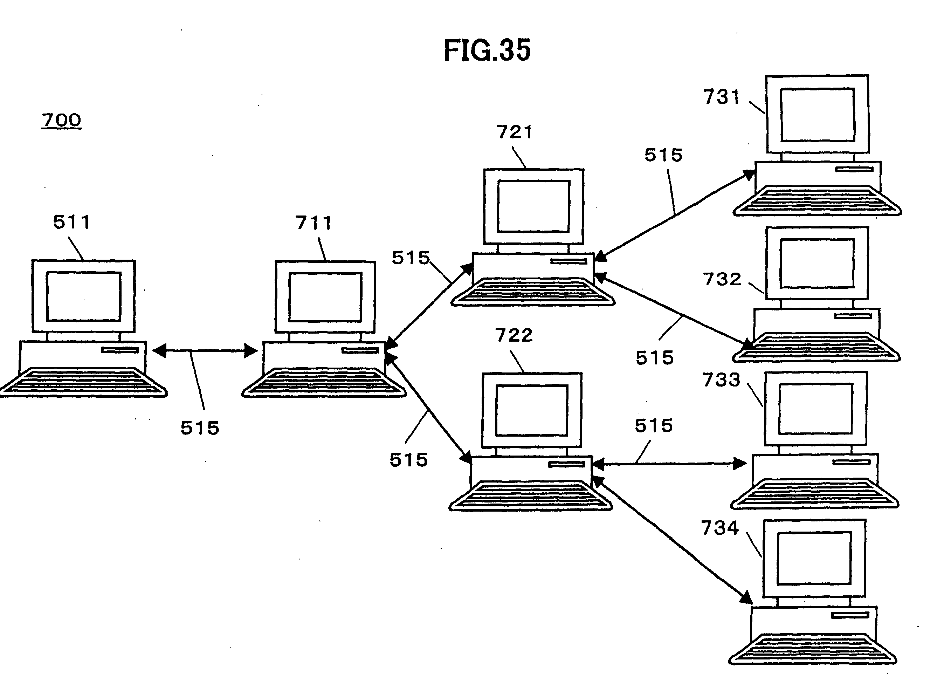

FIG. 35 shows a system configuration view of a sixth embodiment of the present invention. The same reference numeral is given to the same configuration portion as in FIG. 32, and the duplicated description is omitted.

A communication system 700 of the present embodiment causes data to branch off to relay information processing apparatuses 721 and 722 with a relay information processing apparatus 711, and further, the data is made to branch off to communication destination information processing apparatuses 733 and 734 with the relay information processing apparatus 722 while the data is made to branch off to communication destination information processing apparatuses 731 and 732 with the relay information processing apparatus 721. According to the present embodiment, secret performance can be improved further.

In addition, since the method of making data to branch off is the same as that of the information processing system 600 of the fourth embodiment, the duplicated description is omitted.

Moreover, it is also possible to build a communication system of N:N.

### [Seventh embodiment]

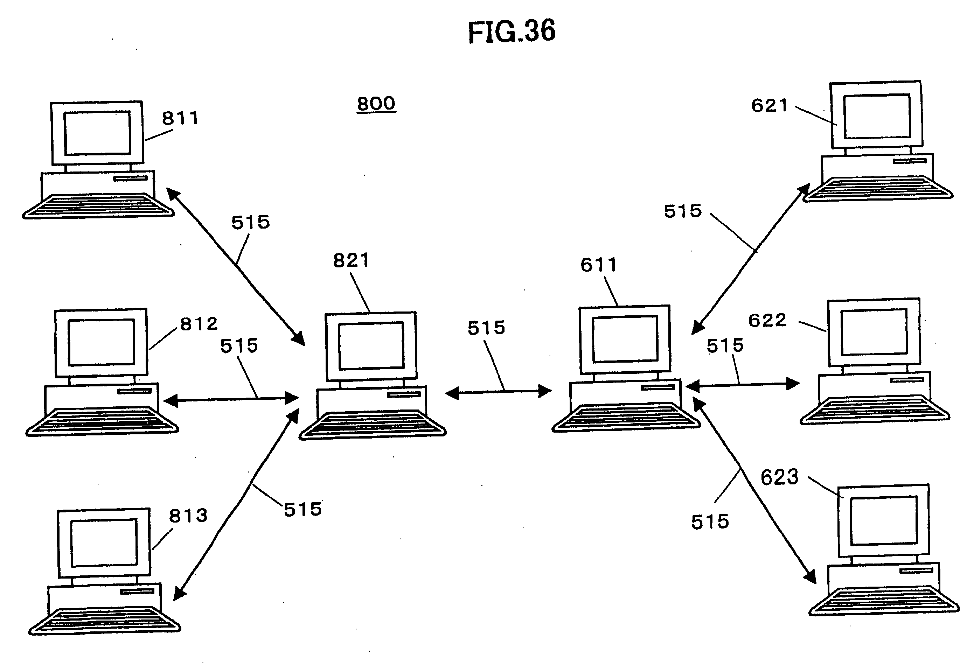

FIG. 36 shows a system configuration view of a seventh embodiment of the present invention. The same reference numeral is given to the same configuration portion as in FIG. 32, and the duplicated description is omitted. In addition, in order to simply the description, a communication system of 3:3 is assumed.

A communication system 800 of the present embodiment is such that relay information processing apparatuses 821 and 811 are used for achieving a relaying function so that encryption communications are achieved between three communication source information processing apparatuses 811 through 813 and three communication destination information processing apparatuses 621 through 623.

As to a manner of encryption, the same manner as that of the information processing system 600 of the fourth embodiment is applied, and thus, the duplicated description is omitted.

Moreover, although the present embodiment assumes the encryption communication system of the three communication source information processing apparatuses 811-813 and three communication destination information processing apparatuses 621-623, it is possible to achieve encryption communications of a system of N:N or N:M.

Furthermore, although the encryption devices are provided in the relay information processing apparatuses in the number of devices corresponding to the number of the communication partners in each of the fifth and sixth embodiments, it is also possible that, for a plurality of communication partners, a single encryption/decryption device is applied.

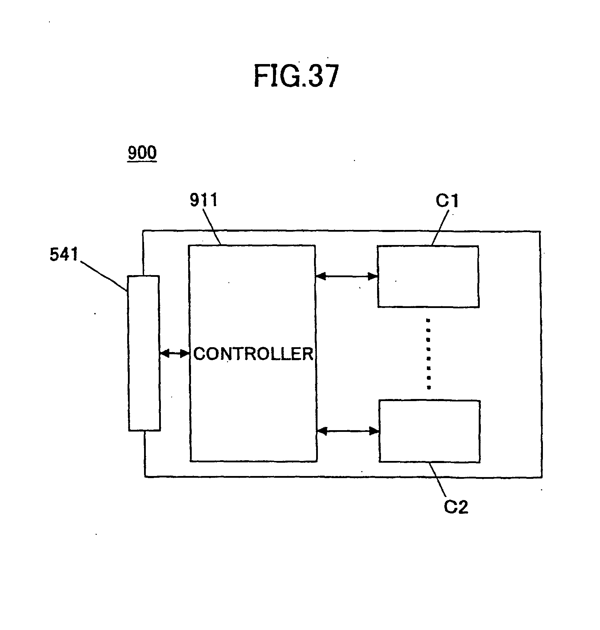

FIG. 37 shows a block configuration view of a first variant of the encryption/decryption device. The same reference numeral is given to the same configuration portion as in FIG. 29, and the duplicated description is omitted.

An encryption/decryption device 900 of this variant has N encryption/decryption processing chips C1 through Cn. Since they have the same configuration as that of the encryption/decryption processing chip C shown in FIG. 29, detailed description of the encryption/decryption processing chips C1 through Cn is omitted.

Each of the N encryption/decryption processing chips C1 through Cn corresponds to the encryption/decryption processing chip or the encryption/decryption device in one of the plurality of communication destination information processing apparatuses or the plurality of relay information processing apparatuses. Each of the N encryption/decryption processing chips C1-Cn performs encryption/decryption with the encryption/decryption chip or the encryption/decryption device of one, which is previously determined to correspond thereto, of the plurality of communication destination information processing apparatuses or the plurality of relay information processing apparatuses.

According to this variant, encryption communications can be performed with the plurality of communication destination information processing apparatuses or the plurality of relay information processing apparatuses, via the single encryption/decryption device.

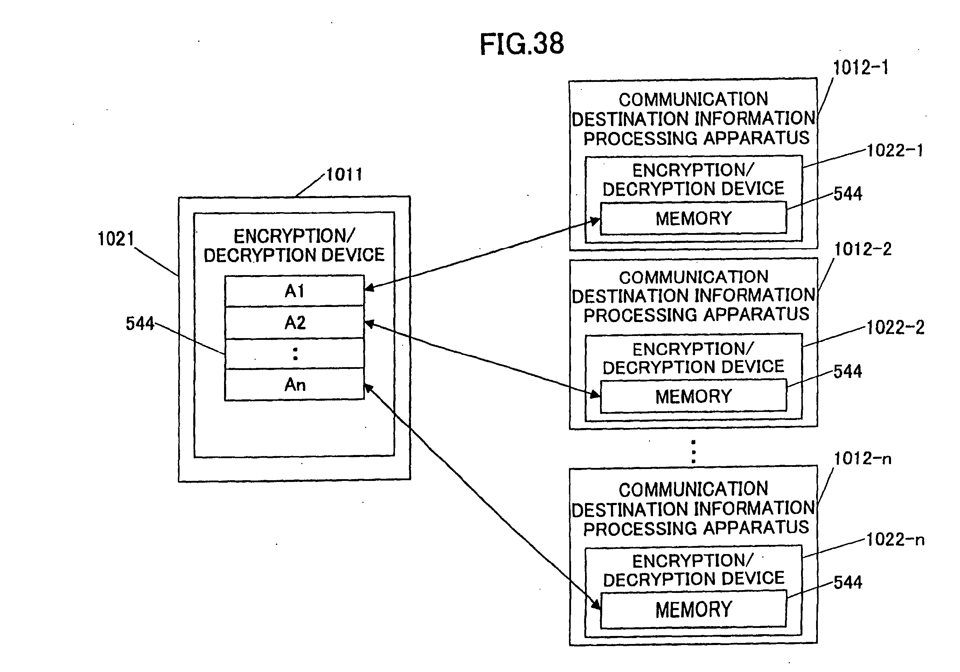

FIG. 38 shows an operation diagram of a second variant of the encryption/decryption device.

In addition, since the encryption/decryption device of this variant has the same configuration as that of FIG. 29, the duplicated description is omitted.

In this variant, encryption communications are performed between a communication source information processing apparatus 1011, and N communication destination information processing apparatuses 1012-1 through 1012-n.

In the communication source information processing apparatus 1011, a encryption/decryption device 1021 has a memory 544 having divided memory areas A1 through An. In each memory area A1, encrypted data for performing encryption communications with the communication destination information processing apparatus 1012-1 is stored. The same encrypted data as the encrypted data stored by the memory area A1 of the memory 544 of the encryption/decryption device 1021 of the communication source information processing apparatus 1011 is stored by the memory 544 of the encryption/decryption device 1021-1 of the communication destination information processing apparatus 1012-1. The memory area A1 of the communication source information processing apparatus 1011 and the memory data of the memory 544 of the communication destination information processing apparatus 1012-1 are dynamically updated with the number of times of communication operations, or the communication data. Thereby, the code cannot be deciphered even if the encrypted data is obtained at a specific time.

In each memory area A2, encrypted data for performing encryption communications with the communication destination information processing apparatus 1012-2 is stored. The same encrypted data as the encrypted data stored to the memory area A2 of the memory 544 of the encryption/decryption device 1021 of the communication source information processing apparatus 1011 is stored by the memory 544 of the encryption/decryption device 1022-2 of the communication destination information processing apparatus 1012-2. The memory area A2 of the communication source information processing apparatus 1011 and the memory data of the memory 544 of the communication destination information processing apparatus 1022-2 are dynamically updated with the number of times of communication operation, or the communication data. Thereby, the code cannot be deciphered even if the encrypted data is obtained at a specific time.

In each memory area An, encrypted data for performing encryption communications with the communication destination information processing apparatus 1012-n is stored. The same encrypted data as the encrypted data stored to the memory area A2 of the memory 544 of the encryption/decryption device 1021 of the communication source information processing apparatus 1011 is stored by the memory 544 of the encryption/decryption device 1022-n of the communication destination information processing apparatus 1012-n. The memory area A2 of the communication source information processing apparatus 1011 and the memory data of the memory 544 of the communication destination information processing apparatus 1022-n are dynamically updated with the number of times of communication operation, or the communication data. Thereby, the code cannot be deciphered even if the encrypted data is obtained at a specific time. In addition, the encrypted data is stored in a similar manner also in the memories 544 of the other memory areas A3 through An-1 and the communication destination information processing apparatuses 1012-3 through 612-n-1.

According to this variant, in the memory 544 of the communication destination information processing apparatus 1012-1 through 1012-n, the encrypted data stored in any of the memory areas A1 through An of the memory 544 of communication source information processing apparatus 1011 should be stored. Accordingly, the storage capacity can be reduced.

Moreover, it is possible that the encryption/decryption device has logics or programs different for respective communication partners.

### [Eighth embodiment]

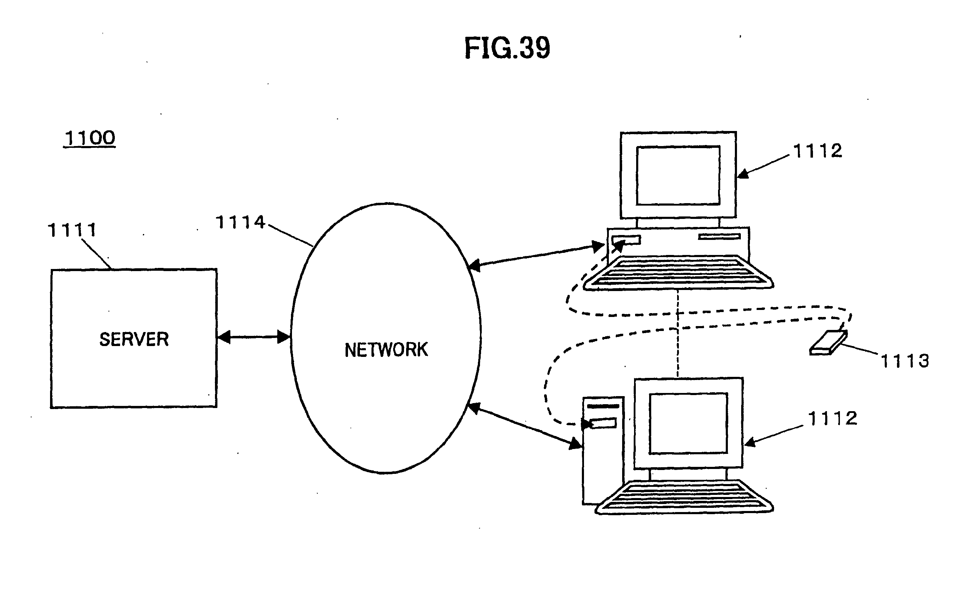

FIG. 39 shows a system configuration view of an eighth embodiment of the present invention.

The present embodiment is a service providing system. The service providing system 1100 of the present embodiment includes a server 1111, an output terminal device 1112, and an portable encryption device 1113.

The server 1111 is configured so as to perform communications with the output terminal apparatus 1112 via a network 1114, stores enciphered data for each registrant which is registered beforehand, and the registrant can freely store the data there. The server 1111 performs communications with the output terminal apparatus 1112, and can take out freely the data which the registrant stored beforehand. As having such a configuration, the server 1111 may be referred to as a private data center. At this time, encryption communications are performed between the server 1111 and output terminal apparatus 1112.

The output terminal apparatus 1112 is equipped with the portable encryption device 1113 in order to perform encryption communications. All of the data communicated between the server and output terminal apparatus 1112 is communicated in an enciphered state via the portable encryption device 1113. Therefor, the registrant registered beforehand owns the portable encryption device 1113, and the registrant registered beforehand can refer to the data beforehand registered into the server 1111 with the output terminal apparatus 1112. Moreover, the server 1111 performs communications with the portable encryption device 1113, and thus authenticates the registrant.

By loading in the output terminal apparatus 1112 the portable encryption device 1113, the portable encryption device 1113 can perform authentication against the server 1111 automatically, and communication data with the server 1113 can be enciphered/decoded automatically. By this, the data can be safely provided to each registrant. In addition, at this time, since the encryption device 1113 functions as a data pipeline which performs encryption/decryption for each registrant, it is referred to as a private data pipeline.

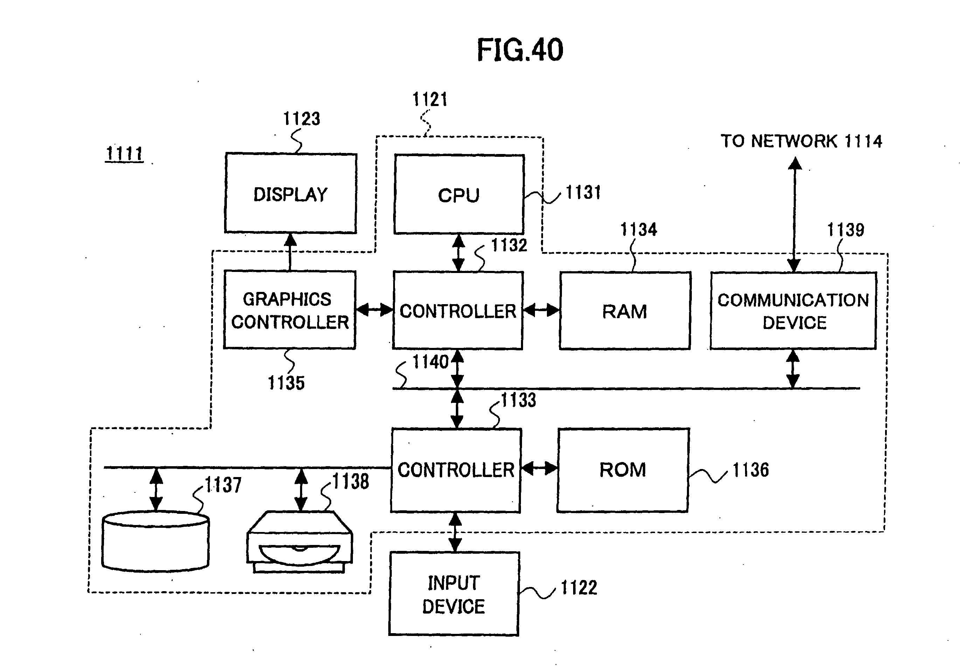

FIG. 40 shows a block configuration view of the server 1111.

The server 1111 includes a body part 1121, an input device 1122, and a display 1123. The body part 1121 is configured to include a CPU 1131, controllers 1132 and 1133, a RAM 1134, a graphics controller 1135, a ROM 1136, a hard disk drive 1137, a CD-ROM drive 1138, a communication device 1139, and a PCI (peripheral component interconnect) bus 1140.

The CPU 1131 processes data based on a program installed in the hard disk drive 1137. For example, the program is stored in the CD-ROM disk d, and is provided therefrom. The program is installed in the hard disk drive 1137 after being read from the CD-ROM disk d with the CD-ROM drive 1138. The program installed in the hard disk drive 1137 is extracted into the RAM 1134 and is performed by the CPU 1131.

The CPU 1131 communicates with the RAM 1134, the graphics controller 1135, and the PCI bus 1140, via the controller 1132. The RAM 1134 is used as a work memory area of the CPU 1131. The graphics controller 1135 creates image data from data processed by the CPU 1131, and supplies it to the display 1123. The display 1123 includes a CRT (cathode ray tube) or an LCD (liquid crystal display), and displays therewith a page according to the image data.

The controller 1133 and communication device 1139 are connected to the PCI bus 1141. The controller 1133 performs communication control with the PCI bus 1141, ROM 1136, hard disk drive 1137, CD-ROM drive 1138 and input device 1122.

Various setting information is stored by the ROM 1136. Programs and data are stored in the hard disk drive 1137 for each of persons who are registered for a service according to the present embodiment. The data thus stored by the hard disk drive 1137 is enciphered by the portable encryption device 1113 which the registrant owns. Thereby, the data stored in the hard disk drive 1137 cannot be referred to by any person other than the registrant, even if it is accessed thereby.

The CD-ROM drive 1138 carries out reading/writing of the data stored by the CD-ROM disk d. The input device 1122 includes a keyboard and a mouse, and it is used for inputting data, instructions for processing, etc. The communication device 1139 is connected with the PCI bus 1140, and performs communication control with the output terminal apparatus 1112 through the network 1114.

Next, a configuration of the output terminal apparatus 1112 will be described.

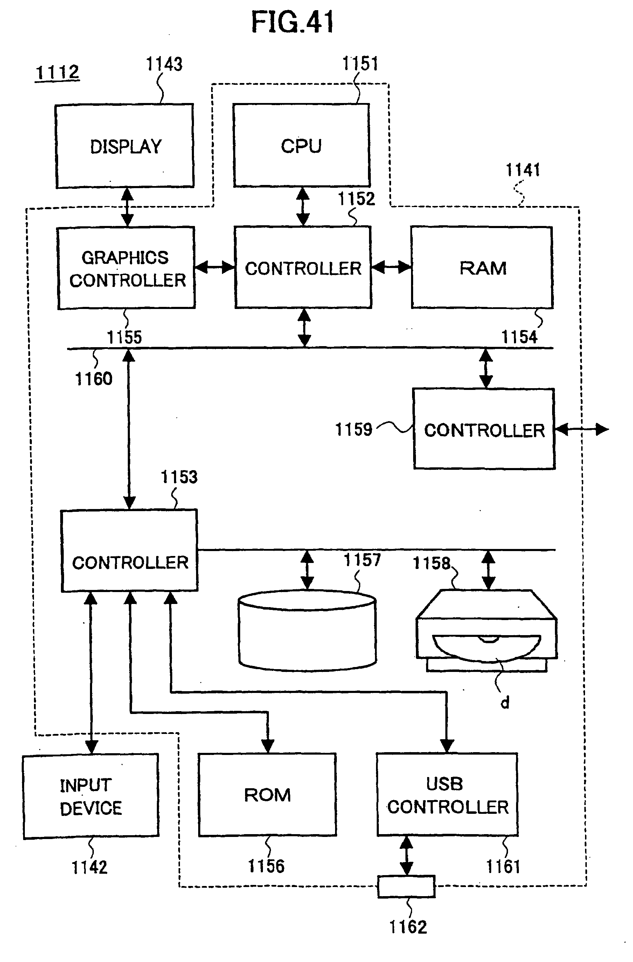

FIG. 41 shows a block configuration view of the output terminal apparatus 1112.

The output terminal apparatus 1112 includes a body part 1141, an input device 1142, and a display 1123. The body part 1141 includes a CPU 1151, controllers 1152 and 1153, a RAM 1154, a graphics controller 1155, a ROM 1156, a hard disk drive 1157, a CD-ROM drive 1158, a communication device 1159, a PCI bus 1160, a USB controller 1161, and a USB port 1162.

The CPU 1151 processes data based on a program installed in the hard disk drive 1157. For example, the program is stored in the CD-ROM disk d, and is provided therefrom. The program is installed in the hard disk drive 1137 after being read from the CD-ROM disk d with the CD-ROM drive 1158. The program installed in the hard disk drive 1157 is extracted into the RAM 1154 and is performed by the CPU 1151.

The CPU 1151 communicates with the RAM 1154, the graphics controller 1155, and the PCI bus 1160, via the controller 1152. The RAM 1154 is used as a work memory area of the CPU 1151. The graphics controller 1155 creates image data from data processed by the CPU 1151, and supplies it to the display 1143. The display 1143 includes a CRT (cathode ray tube) or an LCD (liquid crystal display), and displays therewith a page according to the image data.

The controller 1153 and communication device 1159 are connected to the PCI bus 1160. The controller 1153 performs communication control with the PCI bus 1160, ROM 1156, hard disk drive 1157, CD-ROM drive 1158 and input device 1142. Various setting information is stored by the ROM 1156.

The program is stored by the hard disk drive 1157. In addition, programming is made such that data processed with the output terminal apparatus 1112 is not left in the hard disk drive 1157. The CD-ROM drive 1158 carries out reading/writing of data stored by the CD-ROM disk d. The input apparatus 1142 includes a keyboard and a mouse, and used to input data, instructions for processing, etc. The communication device 1159 is connected with the PCI bus 1160 and performs communication control with the server 1111 through the network 1114.

The USB controller 1161 performs communications with an apparatus connected to the USB port 1162. The portable encryption device 1113 is connected to the USB port 1162. In addition, data which is communicated between the output terminal apparatus 1112 and server 1111 is communicated via the portable encryption device 1113 at any time. That is, the portable encryption device 1113 functions as a data pipeline.

Next, the configuration of the portable encryption device 1113 will be described.

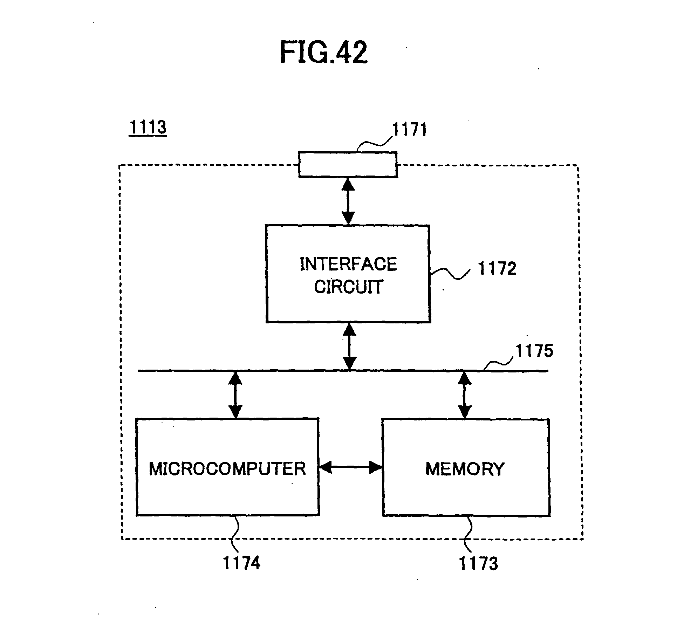

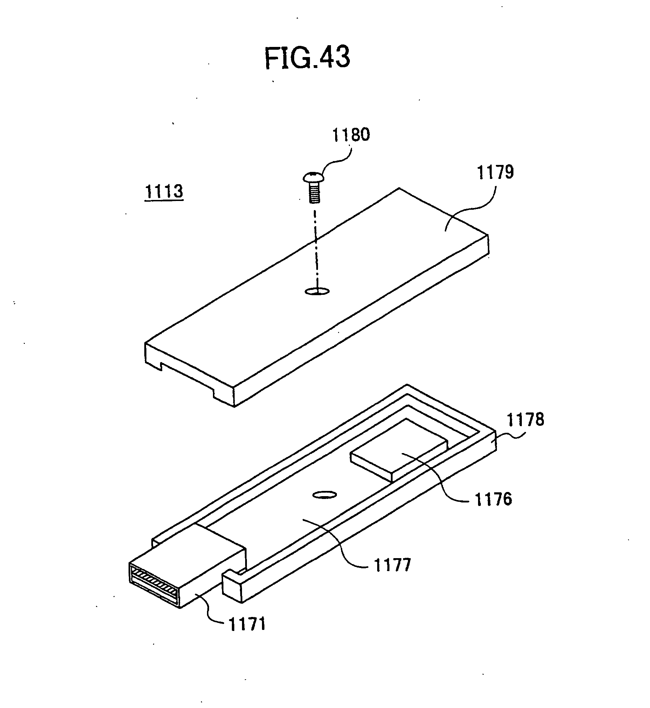

FIG. 42 shows a block configuration view of the portable encryption device 1113, and FIG. 43 shows an exploded perspective view of the portable encryption device 1113.

The portable encryption device 1113 includes a USB connector 1171, an interface circuit 1172, a memory 1173, a microcomputer 1174, and an internal bus 1175. The interface circuit 1172, the memory 1173, the microcomputer 1174, and the internal bus 1175 are built in an IC (integrated circuit) 1176. The IC 1176 is mounted in a printed wiring board 1177. The USB connector 1171 is mounted in the printed wiring board 1177. The printed wiring board 1177 on which the IC 1176 and the USB connector 1171 are mounted is held in a case 1178. An opening of the case 1178 is equipped with a cover 1179 with a screw 1180. At this time, the USB connector 1171 extends outside from the cases 1178 and 1179, and can be loaded into the USB port 1162 of the output terminal apparatus 1112.

The USB connector 1171 is mounted on the printed wiring board 1177, and is inserted into the USB port 1162 of the output terminal apparatus 1112. The USB connector 1171 is connected to the interface circuit 1172. The interface circuit 1172 acts as an interface between the USB port 1162 and the internal bus 1175.

The internal bus 1175 is a bus for achieving communications between the interface circuit 1172, memory 1173, and microcomputer 1174. In the memory 1173, encrypted data which having undergone predetermined encryption is stored with addresses as input data therefor. The microcomputer 1174 acquires the encrypted data with reference to the memory 1173 with the data used as the address, when transmitting the data to the server 1111 from the output terminal apparatus 1112. The acquired encrypted data is transmitted to the server 1111 by the communication device 1159 of the output terminal apparatus 1112. Moreover, when receiving encrypted data from the server 1111 with the output terminal apparatus 1112, the microcomputer 1174 searches the memory 1173 with the data from the server 1111, and supplies the address at which the relevant data is stored, to the output terminal apparatus 1112 At this time, the encryption/decryption method used by the communication system or information processing system described above in other embodiments may be applied for the encryption/decryption also in this case.

The encryption and decoding of the data are performed as mentioned above.

Next, processing operation of the server 1111, output terminal apparatus 1112, and portable encryption device 1113 will be described.

First, processing operation of the server 1111 will be described.

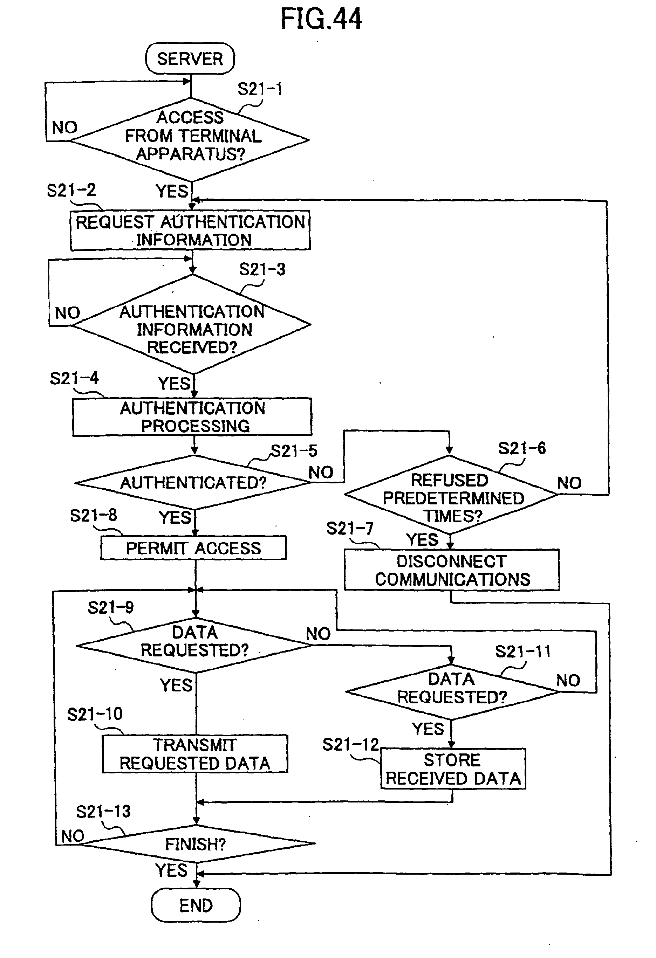

FIG. 44 shows a processing flow chart of the server 1111.

In the server 1111, when an access request is received from the output terminal apparatus 1112 at a step S21-1, authentication information is required to the output terminal apparatus 1112 at a step S21-2. Next, the server 1111 performs authentication processing at a step S21-4, when authentication information is received from the output terminal apparatus 1112 at a step S21-3 in response. The authentication processing compares the authentication information supplied from the output terminal apparatus 12 with authentication information beforehand registered in the server 1111, and determines whether both are in agreement. When the authentication information supplied from the output terminal apparatus 1112 is in agreement with the authentication information beforehand registered in the server 1111, the access to the server 1111 is permitted.

The server 1111 determines whether the access is permitted at a step S21-5. When the access is not permitted at the step S21-5, the server 1111 determines whether the number of times at which the access is refused reaches a predetermined number of times, at a step S21-6. The server 11 disconnects the communication at a step S21-7, if the number of times at which the access is refused has reached the predetermined number of times, at the step S21-6.

Moreover, when the number of times at which the access is refused has not yet reached the predetermined number of times at the step S21-6, return is made to the step S21-2 and the authentication processing is performed again. The server 1111 permits access of the output terminal apparatus 1112 to the server 1111 at a step S21-8, when the access is permitted at the step S21-5.

If the access is thus permitted and data is required from the output terminal apparatus 1112 at a step S21-9, the server 1111 reads the data required for the permitted registrant from the memory area assigned beforehand, and transmits it to the output terminal apparatus 1112 at a step S21-10. Moreover, the server 1111 stores data received, into the memory area beforehand assigned for the registrant, if the data from the output terminal apparatus 1112 is received at a step S21-10. At this time, the enciphered data from the output terminal apparatus 1112 is stored.

The server 1111 repeats the processing of the steps S21-9 through S21-12 until a notice of finish is transmitted from the output terminal apparatus 1112 at the step S2-12.

Next, operation of the output terminal apparatus 1112 will be described.

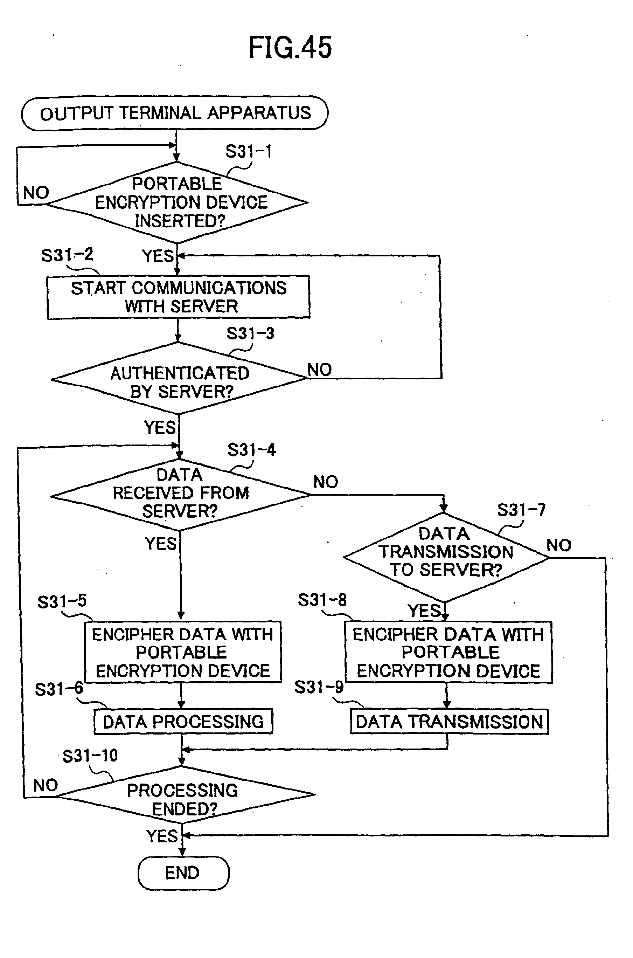

FIG. 45 shows a processing flow chart of the output terminal apparatus 1112.

The output terminal apparatus 1112 starts communications with the server 1111 at a step S31-2, when the portable encryption device 1113 is loaded into the USB port 1162 at a step S31-1. The output terminal apparatus 1112 reads authentication information etc. from the portable encryption device 1113 based on instructions from the server 1111, and supplies it to the server 1111.

When the access is permitted by the server 1111 at a step S31-3, communications of the output terminal apparatus 1112 with the server 1111 is achieved through the portable encryption device 1113. The output terminal apparatus 1112 supplies the data from the server 1111 to the portable encryption device 1113 at a step S31-5 when the data is received from the server 1111 at a step S31-4. The portable encryption device 1113 decodes the data and returns it to the output terminal apparatus 1112. The output terminal apparatus 1112 opens an application corresponding to the data thus decoded by the portable encryption device 1113, and performs desired processing therewith. For example, the decoded data is displayed on the display 1143.

Moreover, the output terminal apparatus 1112 supplies the data which is to be transmitted at a step S31-8 to the portable encryption device 1113, when transmitting the data processed, to the server 1111 at a step S31-7. The portable encryption device 1113 reads the data from the memory 1173 in use of the data thus supplied from the output terminal apparatus 1112 as the address. The data thus read from the memory 1173 is again supplied to the output terminal apparatus 1112 as the encrypted data.

The output terminal apparatus 1112 transmits the encrypted data thus enciphered with the portable encryption device 1113 at a step S31-9 to the server 1111. The output terminal apparatus 1112 repeats the steps S31-4 through S31-10 until the access with the server 1111 is disconnected at a step S31-10.

Encryption communications are thus performed between the server 1111 and output terminal apparatus 1112.

Next, operation of the portable encryption device 1113 will be described.

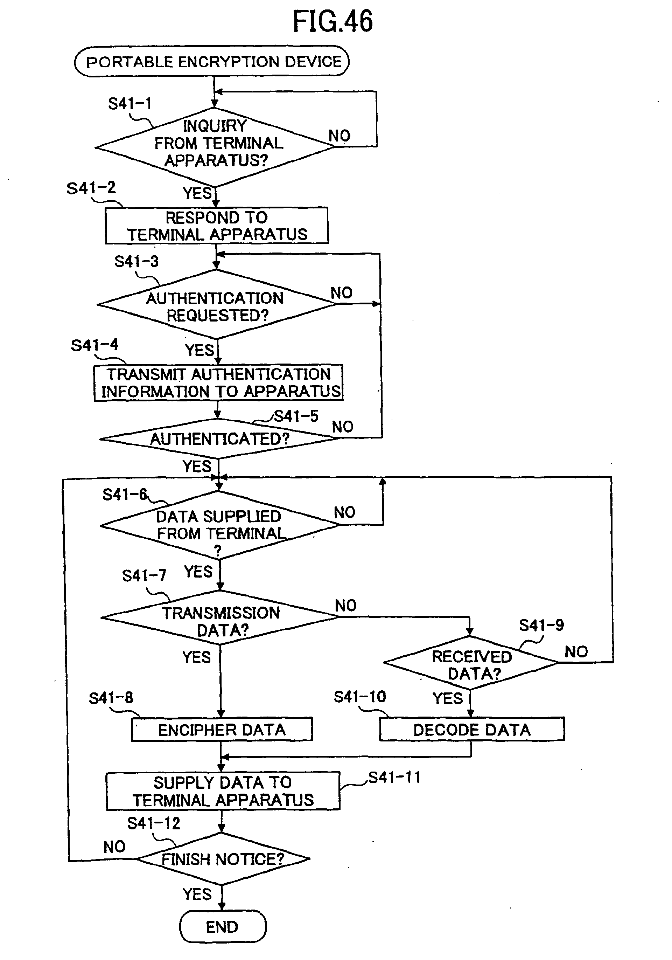

FIG. 46 shows a processing flow chart of the portable encryption device 1113.

When the portable encryption device 1113 is loaded into the USB port 1162 of the output terminal apparatus 1112 with the USB connector 1171 and receives an inquiry from the output terminal apparatus 1112 at a step S41-1, it is responded to, to the output terminal apparatus 1112 at a step S41-2. When the portable encryption device 1113 receives an authentication request through the output terminal apparatus 1112 from the server 1111 at a step S41-3, the authentication information is supplied to the output terminal apparatus 1112 at a step S41-4. At this time, the authentication information may be enciphered before being transmitted. For the purpose of enabling enciphering of the authentication information at this time, also in the server 1111, it is necessary to connect to the PCI bus 1140 an encryption device having a memory built therein which has the same data contents as those of the memory 1173 of the portable encryption device 1113.

The portable encryption device 1113 operates as the private data pipeline, when the access permission to the server 1111 is made through the output terminal apparatus 1112 at a step S41-5. The portable encryption device 1113 enciphers data at a step S41-8, when the data is supplied from the output terminal apparatus 1112 at a step S41-6 and it is determined that the data supplied by the output terminal apparatus 112 should be transmitted to the server 1111 at a step S41-7. Moreover, when the data from the output terminal apparatus 1112 is the data from the server 1111, i.e., the enciphered data, in step S41-9, it is decoded.

The portable encryption device 1113 supplies the data enciphered or decoded at a step S41-12 to the output terminal apparatus 1112. The portable encryption device 1113 repeats the step S41-6 through S41-12 until a notice of finish is supplied from the output terminal apparatus 1112 at a step S41-12.

By the above, the portable encryption device 1113 can act as the private data pipeline, and encryption communications can be performed between the server 1111 and output terminal apparatus 1112.

In addition, the data transmitted to the output terminal apparatus 1112 by the server 1111 is automatically deleted after the communication finish, with driver software or so, for example, and, thus, the data is avoided from being referred to by another registrant. By this, the secrecy performance in the output terminal apparatus 1112 is secured.

In the above-mentioned example, the data is stored in the server in an enciphered state. However, it is also possible that it is stored after being decoded.

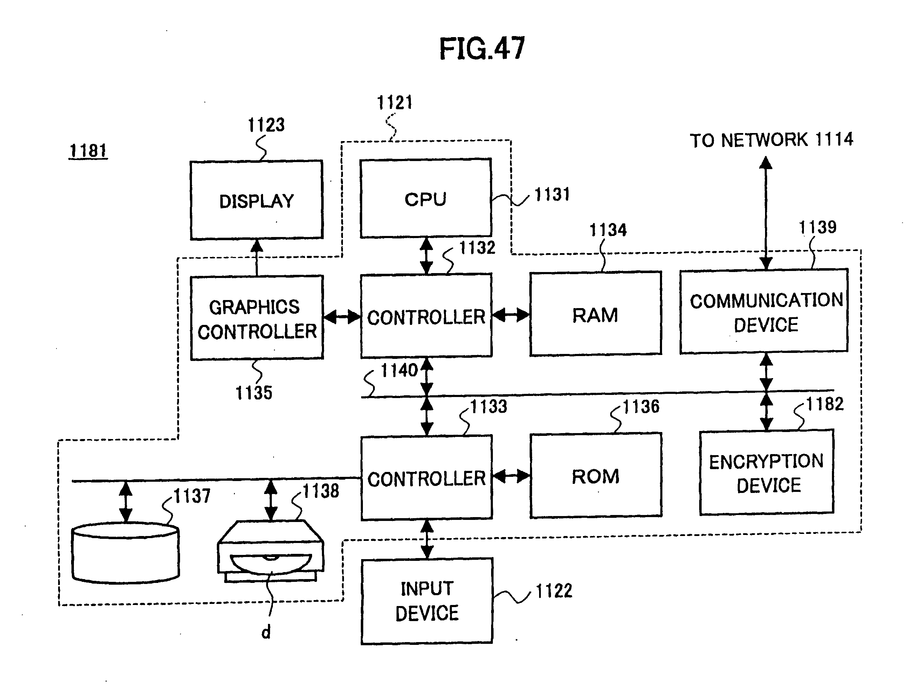

FIG. 47 shows a block configuration view of a variant of the server 1111. The same reference numeral is given to the same configuration portion as in FIGS. 39 and 40, and the duplicated description is omitted.

The server 1181 of this variant has an encryption device 1182. The encryption device 1182 is a PCI board connected to the PCI bus 1140.

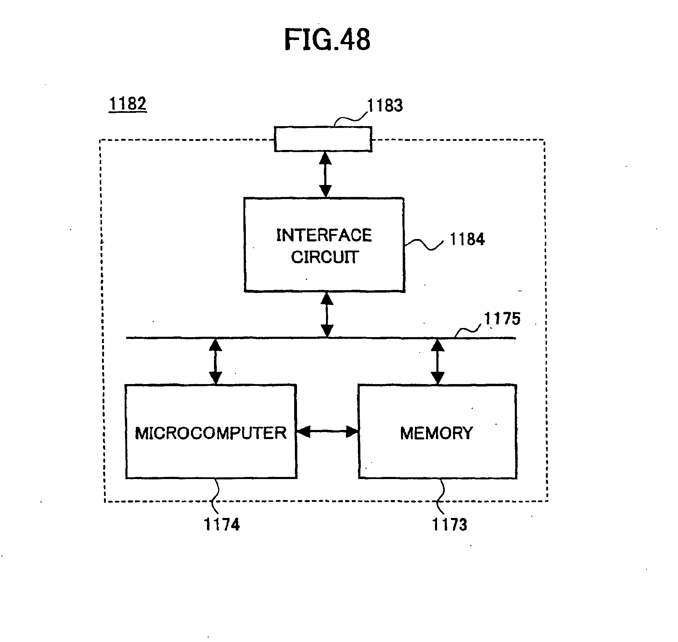

FIG. 48 shows a block configuration view of the encryption device 1182. The same reference numeral is given to the same configuration portion as in FIG. 42, and the duplicated description is omitted.

In this variant, the encryption device 1182 has a form of a PCI board, wherein, instead of the USB connector 1171 of the portable encryption device 1113, a PCI bus connector 1183 is provided for connecting with the PCI bus 1140, and, instead of the interface circuit 1172, the interface circuit 1140 is provided acting as an interface between the PCI bus 1140 and the internal bus 1175. Moreover, the encryption device 1182 is formed for each registrant.

According to this variant, secret communications can be achieved with an E-mail, or so being received with the server 1181. The E-mail is stored in the server 1181, and the registrant accesses the server 1111 with the portable encryption device 1113, and reads the mail. At this time, the mail is enciphered, and is transmitted to the output terminal apparatus 1112, and then, the mail is decoded by the portable encryption device 1113, and is displayed on the output terminal apparatus 1112.

The same contents for each registrant should be stored in the memory 1173 of the personal digital assistant apparatus 1113 and the memory 1173 of the encryption device 1182 of the server 1181. Moreover, it is possible to update the contents of the memory 1173 of the personal digital assistant apparatus 1113 and the memory 1173 of the encryption device 1181 of the server 1181 based on, for example, the number of times of communication operations, communication data, or external information.

Moreover, it is possible that, the memory area of the memory 1173 of the encryption device 1182 of the server 1181 is divided into plurality of areas, one of which is then made correspond to one portable encryption device 1113, and, thus, one encryption device 1182 is made to correspond to a plurality of portable encryption devices 1113.

Moreover, it is also possible that the encryption device 1182 is made to correspond to a plurality of portable encryption devices 1113 by a configuration in which an interface circuit, a microcomputer, and a memory are formed into one chip, and a plurality of chips each thus produced is mounted on one substrate.

In addition, in the present embodiment, the portable encryption device 1113 is made to perform communications with the output terminal apparatus 1112 via the USB interface. However, it is not necessarily to be limited to this, and another type of interface may be applied. Moreover, a non-contacting radio communication system or so may be applied for the communications.

Moreover, the shape of the portable encryption device 1113 is not necessarily limited to a rectangular parallelepiped shape, and a various shape may be applied, such as a key shape. Moreover, it is also possible to apply an integrated circuit card shape. Furthermore, in case a radio communication system is applied, a form of an accessory such as an earring, a pendant, a ring, or so may be applied. Moreover, it is also possible to apply a form of easily carriable, such as that of a clock, pen, cellular phone, or so.

## Claims

1. A communication apparatus performing data communications with a communication partner, comprising:
data converting means for converting the data with a function or a protocol which is common with the communication partner; and
updating means for updating the function or protocol used in said converting means in response to a communication with the communication partner.

2. The communication apparatus as claimed in claim 1, wherein:
said updating means changes the function or protocol based on the number of times of data communication operations.

3. The communication apparatus as claimed in claim 1 or 2, wherein:
said updating means changes the function or protocol based on the data of the data communications made with the communication partner.

4. The communication apparatus as claimed in claim 1 or 3, wherein:
said updating means updates the function or protocol by selecting one function or protocol from among a previously set plurality of functions or protocols, according to the number times of data communication operations.

5. The communication apparatus as claimed in claim 1 or 4, wherein:
said updating means updates the function or protocol by selecting one function or protocol from among a previously set plurality of functions or protocols according to the data of data communications.

6. The communication apparatus as claimed in claim 1 or 5, wherein:
said updating means executes a plurality of updating methods in a combination manner.

7. The communication apparatus as claimed in claim 6, wherein:
said updating means makes the plurality of updating methods different for each communication operation.

8. The communication apparatus as claimed in claim 6 or 7, wherein:
said updating means executes the plurality of updating methods for one unit of data in a combination manner.

9. The communication apparatus as claimed in claim 1 or 8, wherein:
said updating means updates the function or protocol based on sharable external information.

10. The communication apparatus as claimed in claim 1 or 9, wherein:
said changing means performs nonlinear transition.

11. A communication apparatus, comprising:
a common item obtaining part obtaining a common item which is common with a reception end;
key generating means for generating a key based on the common item generated by said common item obtaining part;
encryption key generating means for generating a function or protocol based on the key generated by said key generating means; and
enciphering means for performing encryption based on the function or protocol generated by said encryption key generating means.

12. The communication apparatus as claimed in claim 10, wherein:
said key generating means obtains predetermined information included in the function or protocol as the key.

13. The communication apparatus as claimed in claim 10 or 11, wherein:
said function or protocol generating means generates a subsequent function or protocol by making nonlinear transition of a table value.

14. A communication apparatus, comprising:
a common item obtaining part obtaining a common item which is common with a transmission end;
key generating means for generating a key which is common with the transmission end, based on the common item generated by said common item obtaining part;
encryption key generating means for generating a function or protocol which is common with the transmission end, based on the key generated by said key generating means; and
decoding means for performing decoding based on the function or protocol generated by said encryption key generating means.

15. An encryption apparatus comprising:
an enciphering part reading original data from a file and enciphering it;
intermediate file storing means for storing in an intermediate file enciphered data enciphered by said enciphering part;
a decoding part decoding the data stored in said intermediate file, and decoding it; and
file storing means for storing as a predetermined file data decoded by said decoding part.

16. The encryption apparatus as claimed in claim 15, further comprising communicating means for transmitting the file stored in said file storing means to a communication partner via a network.

17. The encryption apparatus as claimed in claim 15 or 16, wherein:
said enciphering part comprises table generating means for dynamically changing a table used for enciphering the original data.

18. The encryption apparatus as claimed in claim 17, wherein:
said enciphering part comprises:
key generating means for generating a key based on the common item;
table selecting means for selecting a predetermined table from among a plurality of tables generated by said table generating means based on the key generated by said key generating means; and
enciphering means for performing encryption.

19. An information processing apparatus, comprising:
a file part storing data;
an enciphering part reading the data from said file part, and enciphering it;
intermediate file storing means for storing in said file part as an intermediate file the enciphered data enciphered by said enciphering part;
a decoding part decoding the data stored in said intermediate file; and
file storing means for storing the data decoded by said decoding part in said file part.

20. An information processing method, comprising:
an enciphering step of reading original data from a file and enciphering it;
an intermediate file storing step of storing in an intermediate file the enciphered data enciphered in said enciphering step;
a decoding step of decoding the data stored in the intermediate file; and
a file storing step of storing the data decoded in said decoding step as a predetermined file.

21. A communication system performing enciphering communications via a repeating communication apparatus between a source communication apparatus and a destination communication apparatus, wherein:
said communication apparatus comprises enciphering means for performing predetermined encryption on communication data, and decoding communication data having undergone the predetermined encryption; and
encryption performed by said enciphering means is made different for each of the communication apparatuses.

22. The communication system as claimed in claim 21, wherein:
serial communication is performed from the source communication apparatus to the destination communication apparatus via a plurality of communication apparatuses in a relay manner.

23. A communication system in which encryption communications are performed between a plurality of source communication apparatuses and a plurality of destination communication apparatuses, comprising:
a first relay communication apparatus which performs encryption communications with said plurality of source communication apparatuses; and
a second relay communication apparatus which relays encryption communications between said first relay communication apparatus and said plurality of destination communication apparatuses,
wherein encryption communications are performed between said first relay communication apparatus and second relay communication apparatus.

24. The communication system as claimed in claim 23, wherein:
said first relay communication apparatus performs encryption which is different among the plurality of source communication apparatuses.

25. The communication system as claimed in claim 23 or 24, wherein:
said second relay communication apparatus performs encryption which is different among the plurality of destination communication apparatuses.

26. A communication apparatus which performs encryption communications between a first communication apparatus and a second communication apparatus, comprising:
first encryption communicating means performing encryption communications with said first communication apparatus; and
second encryption communicating means performing encryption communications with said second communication apparatus.

27. A communication apparatus relaying encryption communications between a first group of communication apparatuses and a second group of communication apparatuses, comprising:
first encryption communicating means performing encryption communications with said first group of communication apparatuses; and
second encryption communicating means performing encryption communications with said second group of communication apparatuses.

28. A communication method for performing encryption communications between a communication source and a communication destination, wherein:
a relay apparatus relays communications between said communication source and said communication destination; and
encryption is performed in a manner different for each relaying operation.

29. A communication method for performing encryption communications between a plurality of communication sources and a plurality of communication destinations, wherein:
a first relay communication apparatus performs encryption communications with said plurality of communication sources;
a second relay communication apparatus relays encryption communications between said first relay communication apparatus and said plurality of communication destinations; and
encryption communications are performed between said first relay communication apparatus and said second relay communication apparatus.

30. An encryption apparatus comprising:
a communication part performing communications with an external apparatus;
an enciphering part performing enciphering and decoding of data communicated with said external apparatus via said communication part; and
a control part which inputs the enciphered data from said external apparatus, provides it to said external apparatus after decoding it with said enciphering part, inputs data from said external apparatus, and provides it after enciphering it with said enciphering part.

31. The encryption apparatus as claimed in claim 30, configured to be detachable with a desired interface of said external apparatus.

32. The encryption apparatus as claimed in claim 30 or 31, wherein:
said communication part, said enciphering part and said control part are integrated into a predetermined housing.

33. The encryption apparatus as claimed in claim 30 or 32, wherein:
said control part comprises an authenticating part which performs authentication.

34. An information processing system comprising:
a first information processing apparatus storing data;
a second information processing apparatus which is made communicatable with said first information processing apparatus; and
an enciphering apparatus which is made detachable with said second information processing apparatus, is loaded into said second information processing apparatus, decodes data which is provided from said first information processing apparatus via said second information processing apparatus, so as to make it processable by said second information processing apparatus, and enciphers data processed by said second information processing apparatus, and transmits it to said first processing apparatus via said second information processing apparatus.

35. The information processing apparatus as claimed in claim 34, wherein:
said first processing apparatus stores the data in an enciphered state.

36. The information processing apparatus as claimed in claim 34, wherein:
said first information processing apparatus decodably enciphers the data with said enciphering apparatus and transmits it to said second information processing apparatus, and decodes and stores the data enciphered and provided from said enciphering apparatus via said second information processing apparatus

37. The information processing system as claimed in claim 34 or 36, wherein:
said enciphering apparatus performs communications with said first communication apparatus, and performs authentication.

38. An information processing method of:
loading an enciphering apparatus which is made detachable with a second information processing apparatus into said second information processing apparatus, which is made communicatable with a first information processing apparatus which stores data;
decoding data with said enciphering apparatus provided from said first information processing apparatus via said second information processing apparatus, so as to make it processable by said second information processing apparatus, and, also, causing data processed by said second information processing apparatus to be enciphered, and transmitting it to said first information processing apparatus via said second information processing apparatus.

39. The information processing method as claimed in claim 38, of storing the data into said first information processing apparatus in an enciphered state.

40. The information processing method as claimed in claim 38, causing said second information processing apparatus to transmit the data decodably enciphered by said enciphering apparatus to said first information processing apparatus, and causing said first information processing apparatus to decode and store the data enciphered and provided by said enciphering apparatus via said second information processing apparatus.

41. The information processing method as claimed in claim 38 or 40, causing said enciphering apparatus to communicate with said first information processing apparatus, and perform authentication.

42. A service providing method of:
loading an enciphering apparatus which is made detachable with a second information processing apparatus which is made communicatable with a first information processing apparatus in which data is stored;
causing said enciphering apparatus to decode data provided from said first information processing apparatus via said second information processing apparatus so as to make it processable by said second information processing apparatus; and
causing said enciphering apparatus to encipher data processed by said second information processing apparatus, and transmitting it to said first information processing apparatus via said second information processing apparatus.
